(19) Europäisches Patentamt
European Patent Office
Office européen des brevets

(11) **EP 4 439 314 A1**

(12) **EUROPEAN PATENT APPLICATION**

(43) Date of publication:
**02.10.2024 Bulletin 2024/40**

(21) Application number: **24159941.4**

(22) Date of filing: **27.02.2024**

(51) International Patent Classification (IPC):
***G06F 12/0868*** (2016.01)

(52) Cooperative Patent Classification (CPC):
**G06F 12/0868**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 US 202363455973 P
17.04.2023 US 202363460016 P
21.04.2023 US 202363461240 P
26.07.2023 US 202318226759**

(71) Applicant: **Samsung Electronics Co., Ltd.
Suwon-si, Gyeonggi-do 16677 (KR)**

(72) Inventors:
• **SHRESTHA, Susav Lal
San Jose, CA, 95134 (US)**
• **LI, Zongwang
San Jose, CA, 95134 (US)**
• **PITCHUMANI, Rekha
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **SYSTEM AND METHOD FOR EMBEDDINGS RETRIEVAL**

(57)    A system is disclosed. A processor may include a local memory. A memory may be connected to the processor. A cache-coherent interconnect storage device may also be connected to the processor. An embedding management unit, EMU, may be configured to manage the storage of a document embedding vector in the local memory, the memory, or the cache-coherent interconnect storage device.

FIG. 8

**Description**

TECHNICAL FIELD

The disclosure relates generally to memory and storage, and more particularly to reducing the amount of memory required for query processing.

BACKGROUND

Neural information retrieval systems operate by pre-processing the document information using a language model to generate document embedding vectors, which may be stored in main memory during query processing. A query, once received, may similarly be encoded to produce a query embedding vector. The query embedding vector may be compared with document embedding vectors to determine which document embedding vectors are closest to the query embedding vector, which determines which documents to return to the host.

But embedding vectors may require a large amount of memory to store. For example, a 3 gigabyte (GB) text document might generate approximately 150 GB of document embedding vectors, depending on the language model. Multiply this space requirement by millions or billions of documents, and the amount of main memory required to store all the document embedding vectors becomes a significant problem.

A need remains to support information retrieval systems with a reduced amount of main memory.

SUMMARY

Embodiments of the disclosure include an Embedding Management Unit (EMU). The EMU may track whether document embedding vectors are stored on a storage device, in memory, or in a local memory of a local accelerator. The EMU may also manage moving document embedding vectors between the storage device, the memory, and the local memory of the local accelerator.

BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.

FIG. 1 shows a machine including a storage accelerator for performing similarity searches using document embedding vectors stored on a storage device, according to embodiments of the disclosure.

FIG. 2 shows details of the machine of FIG. 1, according to embodiments of the disclosure.

FIG. 3 shows processing of documents to generate document embedding vectors for use with the local accelerator of FIG. 1 or the storage accelerator of FIG. 1, according to embodiments of the disclosure.

FIG. 4 shows processing of a query using the document embedding vectors of FIG. 3 by the storage accelerator of FIG. 1, according to embodiments of the disclosure.

FIG. 5A shows a first example implementation of a computational storage unit including the storage device of FIG. 1 and the storage accelerator of FIG. 1, according to embodiments of the disclosure.

FIG. 5B shows a second example implementation of a computational storage unit including the storage device of FIG. 1 and the storage accelerator of FIG. 1, according to embodiments of the disclosure.

FIG. 5C shows a third example implementation of a computational storage unit including the storage device of FIG. 1 and the storage accelerator of FIG. 1, according to embodiments of the disclosure.

FIG. 5D shows a fourth example implementation of a computational storage unit including the storage device of FIG. 1 and the storage accelerator of FIG. 1, according to embodiments of the disclosure.

FIG. 6 shows details of the storage device of FIG. 1, according to embodiments of the disclosure.

FIG. 7 shows the memory of FIG. 1, with a document embedding vector of FIG. 3 being evicted to make room for another document embedding vector of FIG. 3, according to embodiments of the disclosure.

FIG. 8 shows an Embedding Management Unit (EMU) managing the storage of the document embedding vectors of FIG. 3 in the storage device of FIG. 1, the memory of FIG. 1, and a local memory of the local accelerator of FIG. 1, according to embodiments of the disclosure.

FIG. 9 shows the relationship between the local memory of FIG. 8, the memory of FIG. 1, and the storage device of FIG. 1, according to embodiments of the disclosure.

FIG. 10 shows a flowchart of an example procedure for the storage accelerator of FIG. 1 to process a query of FIG. 4 using the document embedding vectors of FIG. 3, according to embodiments of the disclosure.

FIG. 11 shows a flowchart of an example procedure for generating the query embedding vector of FIG. 4 from the query of FIG. 4, according to embodiments of the disclosure.

FIG. 12 shows a flowchart of an example procedure for the storage accelerator of FIG. 1 to return a document as a result of the query of FIG. 4, according to embodiments of the disclosure.

FIG. 13 shows a flowchart of an example procedure for the local accelerator of FIG. 1 combining its results with the results of the storage accelerator of FIG. 1, according to embodiments of the disclosure.

FIG. 14 shows a flowchart of an example procedure for the local accelerator of FIG. 1 copying a document embedding vector into the memory of FIG. 1, according to embodiments of the disclosure.

FIG. 15 shows a flowchart of an example procedure for the EMU of FIG. 8 to manage where the document embedding vectors of FIG. 3 are stored, according to embodiments of the disclosure.

FIG. 16 shows a flowchart of an example procedure for the storage accelerator of FIG. 1 processing the query of FIG. 4 using the document embedding vectors of FIG. 3, according to embodiments of the disclosure.

FIG. 17 shows a flowchart of an example procedure for the storage device of FIG. 1 returning the document of FIG. 3 requested by the processor of FIG. 1, according to embodiments of the disclosure.

FIG. 18 shows a flowchart of an example procedure for the storage device of FIG. 1 to return the document embedding vector of FIG. 3 to the processor of FIG. 1, according to embodiments of the disclosure.

FIG. 19 shows a flowchart of an example procedure for the local accelerator of FIG. 1 to process the query of FIG. 4 using the document embedding vector of FIG. 3 based on the EMU of FIG. 8, according to embodiments of the disclosure.

FIG. 20 shows a flowchart of an example procedure for the EMU of FIG. 8 to prefetch the document embedding vector of FIG. 3, according to embodiments of the disclosure.

DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Information retrieval systems may be an important part of a business operation. Each document stored by the information retrieval system may be processed to generate document embedding vectors. These document embedding vectors may be generated in advance (that is, the documents may be preprocessed), which may reduce the burden on the host processor when handling queries. The document embedding vectors may then be stored in the main memory of the information retrieval system, to expedite access to the document embedding vectors (which results in faster identification and retrieval of the relevant documents).

When the information retrieval system receives a query, the query may also be processed to produce a query embedding vector. Since the query is not known in advance, the query embedding vector may be generated from the query in real-time, when the query is received. The query embedding vector may then be compared with the document embedding vectors to determine which documents are closest to the query, and therefore should be returned in response to the query.

There are various different ways in which the query embedding vector may be compared with the document embedding vectors. One approach is to use the K Nearest Neighbors (KNN) algorithm to identify k documents whose embedding vectors are closest to the query embedding vector. Another approach is to use matrix multiplication or a dot-product calculation to determine a similarity score between the query and the documents.

But embedding vectors are often quite large. For example, a 3 gigabyte (GB) document, once processed, might produce 150 GB of document embeddings: a 50-fold increase in storage requirements. Multiply this space requirement by thousands or millions of documents, and the amount of main memory required to store the document embeddings may become significant.

To help reduce the main memory requirement, the document embeddings may be compressed, and may be processed in a compressed form. But even with compression, the amount of main memory needed to store the document embeddings may still be significant.

Some embodiments of the disclosure may address the problem by using a storage device, such as a Solid State Drive (SSD) to store some, most, or all of the document embeddings. Document embeddings may be transferred from the SSD to the main memory as needed, with the main memory being used effectively as a cache for the document embeddings. When a query is received, the system may determine if the relevant document embeddings are currently loaded in main memory. If the relevant document embeddings are currently loaded in main memory, then the query may be processed as usual based on the document embeddings in main memory, using either the host processor or an accelerator (for example, a Graphics Processing Unit (GPU)) to process the query. If the relevant document embeddings are not currently loaded in main memory, an accelerator coupled to the SSD may process the query based on the document embeddings stored on the SSD. If the relevant document embeddings are partially stored in main memory and partially on the SSD, then both paths may be used, with the results combined afterward to rank the documents and retrieve the most relevant documents. Note that in such embodiments of the disclosure, there may be two different accelerators: one that accesses document embedding vectors from main memory, and one that accesses document embedding vectors from the SSD. Both accelerators may also have their own local memory, which they may each use in processing queries.

The accelerator in question may be implemented as part of the storage device, may be integrated into the SSD (but implemented as a separate element), or may be completely separate from the SSD but coupled to the SSD for access to the data stored thereon. For example, the accelerator may be implemented as a specialized unit to perform query processing, or it may be a more general purpose accelerator that is currently supporting query processing: for example, a computational storage unit.

Which document embeddings are stored in main memory may be managed using any desired caching algorithm. For example, a Least Frequency Used (LFU), Least Recently Used (LRU), a Most Recently Used (MRU), or a Most Frequently Used (MFU) caching algorithm may be used to move document embedding vectors into and out of main memory. Note that since document embedding vectors should only change if the underlying document changes, removing a document embedding vector from main memory should not involve writing the document embedding vector back into the SSD: the document embedding vectors may be stored on the SSD for persistent storage. In the situation that a document embedding vector is stored in main memory but not currently stored on the SSD, the document embedding vector may be copied from main memory to the SSD before being evicted from memory. Therefore, the document embedding vector to be removed from the main memory may simply be deleted and a new document embedding vector may be loaded from the SSD into main memory.

In other embodiments of the disclosure, a cache-coherent interconnect storage device may be an SSD supporting the Compute Express Link (CXL®) protocols. (CXL is a registered trademark of the Compute Express Link Consortium, Inc. in the United States and other countries.) An SSD supporting the CXL protocols may be accessed as either a block device or a byte device. That is, the SSD may appear as both a standard storage device and as an extension of main memory. In some embodiments of the disclosure, data may be written or read from such an SSD using both storage device and memory commands.

In such embodiments of the disclosure, there may be only one accelerator to process queries, which may have its own local memory used for processing queries. (Note that as the SSD may be viewed as an extension of main memory, the accelerator may effectively be coupled to both main memory and the SSD.) Between the accelerator memory, the main memory, and the SSD storage, there is effective a multi-level cache for document embeddings. An Embedding Management Unit (EMU) may be used to track where a particular document embedding is currently stored. When a query embedding vector is to be compared with document embedding vectors, the relevant document embedding vectors may be identified, and the EMU may be used to determine if those document embedding vectors are currently loaded into the accelerator memory. If the relevant document embedding vectors are not currently loaded into the accelerator memory, the EMU may transfer the relevant document embedding vectors into the accelerator memory, so that the accelerator may process the query in the most efficient manner possible.

If transferring some document embedding vectors into the accelerator memory requires evicting some other document embedding vectors first, those evicted document embedding vectors may be transferred to the main memory. Similarly, if transferring document embedding vectors into the main memory requires evicting other document embedding vectors, those document embedding vectors may be "transferred" to the SSD. (Again, since document embedding vectors should not change unless the underlying document changes, the document embedding vectors should always be stored on the SSD, and therefore it should not be necessary to write the document embedding vectors back to the SSD.)

The EMU may also perform a prefetch of document embedding vectors expected to be used in the near feature. Such document embeddings may be prefetched from the SSD into main memory, to expedite their transfer into the accelerator memory, if needed as expected.

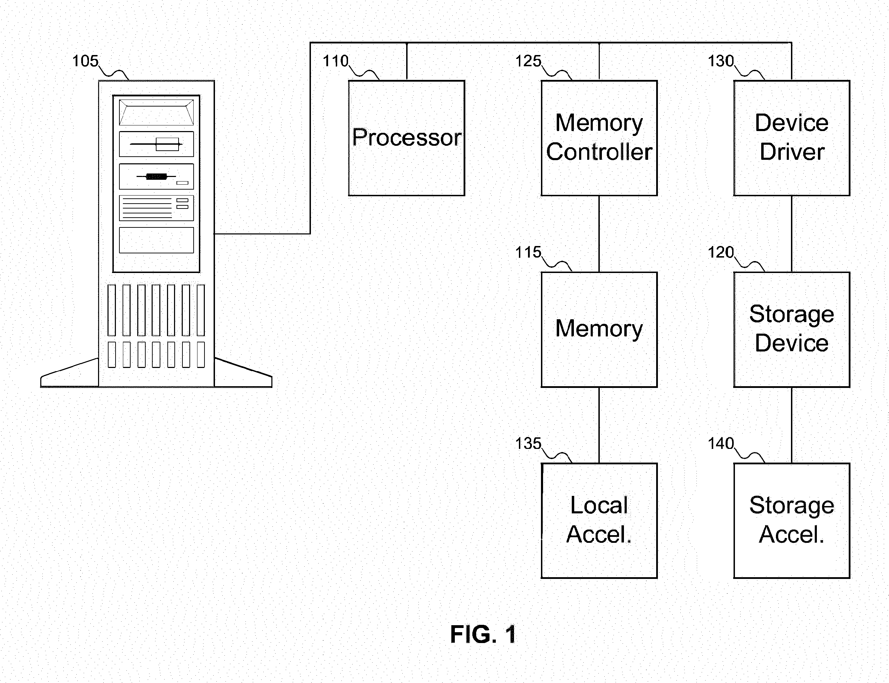

FIG. 1 shows a machine including a storage accelerator for performing similarity searches using document embedding vectors stored on a storage device, according to embodiments of the disclosure. In FIG. 1, machine 105, which may also be termed a host or a system, may include processor 110, memory 115, and storage device 120. Processor 110 may be any variety of processor. Processor 110 may also be called a host processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as Dynamic Random Access Memory (DRAM), Static Random Access Memory (SRAM), Persistent Random Access Memory (PRAM), Ferroelectric Random Access Memory (FRAM), or Non-Volatile Random Access Memory (NVRAM), such as Magnetoresistive Random Access Memory (MRAM), flash memory, etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115.

Storage device 120 may be used to store data that may be termed "long-term": that is, data that is expected to be stored for longer periods of time, or that does not need to be stored in memory 115. Storage device 120 may be accessed using device driver 130. While FIG. 1 shows one storage device 120, there may be any number (one or more) of storage devices in machine 105.

Embodiments of the disclosure may include any desired mechanism to communicate with storage device 120. For example, storage device 120 may connect to one or more busses, such as a Peripheral Component Interconnect Express (PCIe) bus, or storage device 120 may include Ethernet interfaces or some other network interface. Other potential interfaces and/or protocols to storage device 120 may include Non-Volatile Memory Express (NVMe), NVMe over Fabrics (NVMe-oF), Remote Direct Memory Access (RDMA), Transmission Control Protocol/Internet Protocol (TCP/IP), Universal Flash Storage (UFS), embedded MultiMediaCard (eMMC), InfiniBand, Serial Attached Small Computer System Interface (SCSI) (SAS), Internet SCSI (iSCSI), Serial AT Attachment (SATA), and cache-coherent interconnect protocols, such as the Compute Express Link (CXL) protocols, among other possibilities.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure.

For purposes of this document, a distinction is drawn between memory 115 and storage device 120. This distinction may be understood as being based on the type of commands typically used to access data from the components. For example, memory 115 is typically accessed using load or store commands, whereas storage device 120 is typically accessed using read and write commands. Memory 115 is also typically accessed by the operating system, whereas storage device 120 is typically accessed by the file system. (Cache coherent interconnect storage devices, as discussed below, are intended to be classified as storage devices, despite the fact that they may be accessed using load and store commands as well as read and write commands.)

Alternatively, the distinction between memory 115 and storage device 120 may be understood as being based on the persistence of data in the component. Memory 115 typically does not guarantee the persistence of the data without power being provided to the component, whereas storage device 120 may guarantee that data will persist even without power being provided. If such a distinction is drawn between memory 115 and storage device 120, then memory 115 may either not include non-volatile storage forms, or the non-volatile storage forms may erase the data upon power restoration (so that the non-volatile storage form appears as empty as volatile storage forms would appear upon restoration of power).

Alternatively, this distinction may be understood as being based on the speed of access to data stored by the respective components, with the faster component considered memory 115 and the slower component considered storage device 120. But using speed to distinguish memory 115 and storage device 120 is not ideal, as a Solid State Drive (SSD) is typically faster than a hard disk drive, but nevertheless would be considered a storage device 120 and not memory 115.

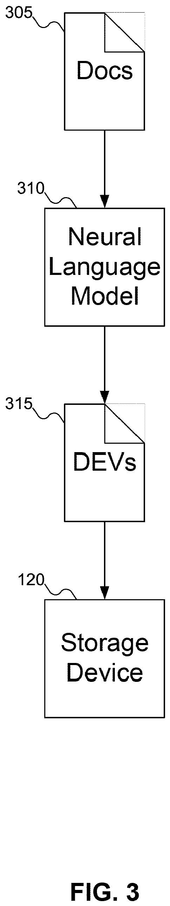

Machine 105 may also include accelerators, such as local accelerator 135 and storage accelerator 140. Local accelerator 135 may perform processing of queries using data stored in memory 115, whereas storage accelerator 140 may perform a similar function using data stored on storage device 120. The operation of local accelerator 135 and storage accelerator 140 are discussed further with reference to FIGs. 3-4 below.

The labels "local accelerator" and "storage accelerator" are used only to distinguish between whether the accelerator in question operates in connection with memory 115 or storage device 120. In practice, the functions performed by accelerators 135 and 140 may be, in part or in whole, similar or even identical. Any reference to "accelerator", without the qualifier "local" or "storage", may be understood to apply to either accelerator 135 or 140, or may, from context, be uniquely identified.

In addition, while FIG. 1 shows local accelerator 135 as separate from processor 110, in some embodiments of the disclosure processor 110 may perform the functions ascribed to local accelerator 135. In other words, accelerator 135 and processor 110 might be the same component.

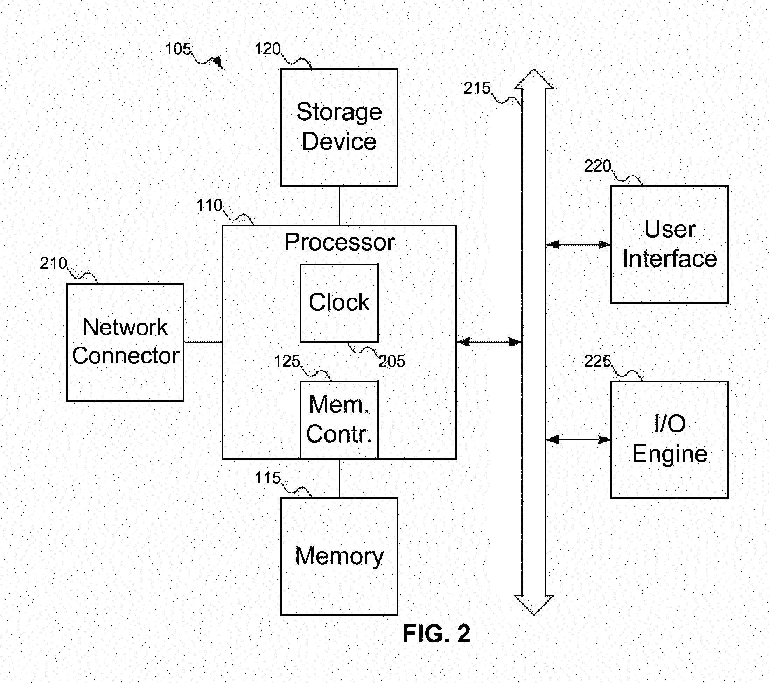

FIG. 2 shows details of the machine of FIG. 1, according to embodiments of the disclosure. In FIG. 2, typically, machine 105 includes one or more processors 110, which may include memory controllers 120 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 125, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3 shows processing of documents to generate document embedding vectors for use with local accelerator 135 of FIG. 1 or storage accelerator 140 of FIG. 1, according to embodiments of the disclosure. In FIG. 3, documents 305 may be processed using neural language model 310 to produce document embedding vectors (DEVs) 315. Documents 305 may take any desired form: for example, text documents, images, other data, databases, etc. Documents 305 may be stored in any manner desired: for example, as entries in a database or as individual files. Typically, documents 305 may be stored on a storage device, such as storage device 120 of FIG. 1. Neural language model 310 may be any desired neural language model, without limitation.

Document embedding vectors 315 may be thought of as n-dimensional vectors, where n may be as small or as large as desired. That is, document embedding vector 315 may be described as a vector including n coordinates: for example, $\overrightarrow{DEV} = \langle dev_1\ dev_2\ dev_3 \cdots dev_n \rangle$ Each document may have its own document embedding vector, which may be generated using any desired model, such as neural language model 310. This mapping from documents 305 to document embedding vectors 315 (by neural language model 310) may, in effect, form a representation of each document 305 that may be mathematically compared to other documents 305. Thus, regardless of how similar or different two documents 305 might appear to a user, their corresponding document embedding vectors 315 may provide a mechanism for mathematical comparison of how similar or different the documents 305 actually are: the more similar documents 305 are, the closer their document embedding vectors 315 ought to be. For example, a distance between two document embedding vectors 315 may be computed. For example, if $\overrightarrow{DEV_1} = \langle dev_{11}\, dev_{12}\, dev_{13} \cdots dev_{1n} \rangle$ represents the document embedding vector 315 for one document 305 and $\overrightarrow{DEV_2} = \langle dev_{21}\, dev_{22}\, dev_{23} \cdots dev_{2n} \rangle$ represents the document embedding vector 315 for another document 305, then the distance between the two document embedding vectors 315 may be calculated. For example, the Euclidean distance between the two document embedding vectors 315 may be computed as $Dist =$

$$\sqrt{|dev_{21} - dev_{11}| + |dev_{22} - dev_{12}| + |dev_{23} - dev_{13}| + \cdots + |dev_{2n} - dev_{1n}|}$$

. Or the taxicab distance between the two document embedding vectors 315 may be computed as $Dist = |dev_{21} - dev_{11}| + |dev_{22} - dev_{12}| + |dev_{23} - dev_{13} + \cdots + |dev_{2n} - dev_{1n}|$. Other distance functions may be also be used. Thus, depending on how well neural language model 310 operates to generate document embedding vectors 315 from documents 305, accurate comparisons between document embedding vectors 315 may be performed.

Once generated, document embedding vectors 315 may be stored on storage device 120. Note that storing document embedding vectors 315 on storage device 120 does not mean that document embedding vectors may not be stored anywhere else. For example, document embedding vectors 315 may also be stored in memory 115 of FIG. 1 for use by local accelerator 135. But because storage device 120 may offer persistent storage (whereas memory 17 of FIG. 1 may be volatile and document embedding vectors 315 might be lost if power is interrupted), storing document embedding vectors 315 on storage device 120 may avoid the need to regenerate document embedding vectors 315 (which might require a significant amount of time).

Note that the process described in FIG. 3 may be performed as preprocessing. That is, neural language model 310 may process documents 305 to generate document embedding vectors 315 before machine 105 of FIG. 1 is ready to receive queries. Since document embedding vectors 315 may be expected to remain unchanged unless documents 305 themselves change, document embedding vectors 315 may be essentially fixed. If new documents 305 are added to the system, neural language model 310 may generate new document embedding vectors 315 for those new documents 305, which may be added to the corpus of document embedding vectors 315. Thus, rather than generating document embedding vectors 315 as needed, document embedding vectors 315 may be generated in advance and be available when needed.

But document embedding vectors 315 may often be larger (perhaps substantially larger) than documents 305. For example, a 3 gigabyte (GB) text document might result in a 150 GB document embedding vector. Thus, depending on the number of documents 305, the amount of space needed to store all document embedding vectors 315 in memory 115 of FIG. 1 may be large. As there is typically an inverse relationship between the speed of a storage component and its cost (the faster the storage component, the more expensive the storage component is per unit of storage), providing sufficient memory 115 of FIG. 1 to store all document embedding vectors 315 may result in a significant expense.

Storage device 120 is typically less expensive per unit of storage than memory 115 of FIG. 1, although memory 115 of FIG. 1 may be faster to access data. Thus, it would be desirable to use both memory 115 of FIG. 1 and storage device 120 to store document embedding vectors 315: for example, to store the most frequently or more often accessed document embedding vectors 315 in memory 115 of FIG. 1, with less often accessed document embedding vectors 315 may be stored on storage device 120.

In some embodiments of the disclosure, document embedding vectors 315 (or a subset of document embedding vectors 315) may be preloaded into memory 115 of FIG. 1. This set of document embedding vectors 315 may be selected in any desired manner: for example, based on which document embedding vectors 315 were most frequently used in some prior queries. In other embodiments of the disclosure, no document embedding vectors 315 may be preloaded into memory 115 of FIG. 1, with selection of which document embedding vectors to add to memory 115 of FIG. 1 done based on queries afterward submitted to machine 105 of FIG. 1.

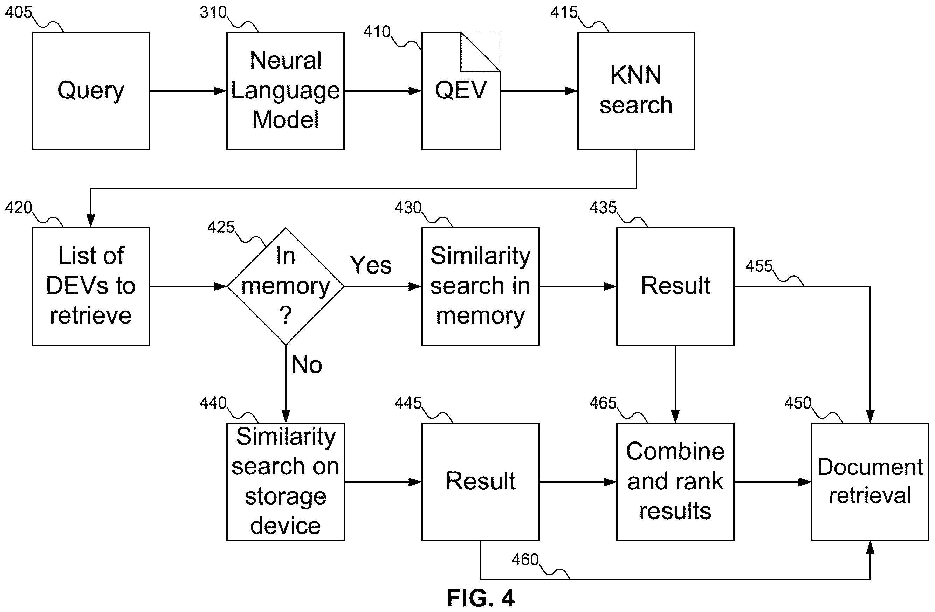

FIG. 4 shows processing of a query using document embedding vectors 315 of FIG. 3 by storage accelerator 140 of FIG. 1, according to embodiments of the disclosure. In FIG. 4, local accelerator 135 of FIG. 1 may receive query 405. Query 405 may be any type of query: for example, a text query, a binary query, or a Structured Query Language (SQL) query, among other possibilities. Query 405 may be received from a machine or host. This machine or host might be machine 105 of FIG. 1, or it might be another machine connected to machine 105 in some manner: for example, across a network, such as a Local Area Network (LAN), a Wide Area Network (WAN), a Metropolitan Area Network (MAN), or a worldwide network, such as the Internet.

Query 405 may be processed by neural language model 310 to produce query embedding vector 410. Note that since query 405 may be a query from a user or an application, the exact contents of query 405 might not be known until query 405 is received. Thus, neural language model 310 might operate in real time to process query 405 and produce query embedding vector 410.

As discussed with reference to FIG. 3 above, document embedding vectors 315 of FIG. 3 may be compared with each other to determine how similarly they are. As query embedding vector 410 may be in the same n-dimensional space as document embedding vectors 315 of FIG. 3, query embedding vector 410 may similarly be compared with document embedding vectors 315 of FIG. 3. This comparison may identify documents 305 of FIG. 3 that are closest to query embedding vector 410: that is, documents 305 of FIG. 3 that best answer query 405.

But given that there might be thousands upon thousands of documents 305 of FIG. 3, to compare query embedding vector 410 with all document embedding vectors 315 of FIG. 3 might require a significant number of comparisons. To reduce the number of comparisons needed, document embedding vectors 315 of FIG. 3 may be grouped into clusters. These clusters may be defined in any desired manner: for example, all document embedding vectors 315 of FIG. 3 within some maximum distance from a "central" vector may be grouped into a cluster (with other clusters being similarly defined). Query embedding vector 410 may then be compared with the "central" vector for each cluster to determine which cluster would contain query embedding vector 410. These "central" vectors may be stored in either memory 115 of FIG. 1 or storage device 120 of FIG. 1 (or transferred/evicted between the two as needed), depending on the implementation. K-nearest neighbor search 415 may be performed to determine which cluster should contain query embedding vector 410. But embodiments of the disclosure may use other approaches to determine to which cluster query embedding vector 410 should belong.

Once the cluster containing query embedding vector 410 has been determined, the list of document embedding vectors 420 belonging to that cluster may be determined. Processor 110 of FIG. 1 (or local accelerator 135 of FIG. 1, depending on the implementation) may then determine whether the document embedding vectors 315 of FIG. 3 to compare with query embedding vector 305 are stored in memory 115 of FIG. 1 or storage device 120 of FIG. 1, as shown at block 425. If document embedding vectors 315 of FIG. 3 are stored in memory 115 of FIG. 1, then local accelerator 135 of FIG. 3 may perform similarity search 430 by comparing query embedding vector 410 with document embedding vectors 315 of FIG. 3. Similarity search 430 may be, for example, calculating distance as described with reference to FIG. 3 above. Or, similarity search 430 may involve either matrix multiplication or dot product computations involving query embedding vector 410 and document embedding vectors 315 of FIG. 3. Whatever form similarity search 430 might take, local accelerator 135 of FIG. 1 may then produce results 435.

As an example, cosine similarity may be used to determine how similar two vectors are. Since the cosine of an angle may range from -1 (cosine of 180°) to 1 (cosine of 0°), a value of (or near) 1 may indicate that the two vectors are similar, a value of (or near) -1 may indicate that the two vectors are opposite to each other, and a value of (or near) 0 may indicate that the two vectors are orthogonal. Cosine similarity may be calculated using the formula

$$S_C\left(\overrightarrow{DEV_1}, \overrightarrow{DEV_2}\right) = \frac{\overrightarrow{DEV_1} \cdot \overrightarrow{DEV_2}}{\left\|\overrightarrow{DEV_1}\right\| \times \left\|\overrightarrow{DEV_2}\right\|} = \frac{\sum_{i=1}^{n}(dev_{1i} \times dev_{2i})}{\sqrt{\sum_{i=1}^{n} dev_{1i}^2} \times \sqrt{\sum_{i=1}^{n} dev_{2i}^2}}.$$

If document embedding vectors 315 of FIG. 3 are not stored in memory 115 of FIG. 1, then local accelerator 135 of FIG. 1 may provide query embedding vector 410 to storage accelerator 140 of FIG. 1. Storage accelerator 140 of FIG. 1 may then perform similarity search 440 using document embedding vectors 315 of FIG. 3 stored on storage device 120 of FIG. 1. Similarity search 440 may be similar to similarity search 430. Storage accelerator 140 of FIG. 1 may produce results 445.

While in some situations the pertinent document embedding vectors 315 of FIG. 3 might be stored only in memory 115 of FIG. 1 or on storage device 120 of FIG. 1, it may be expected that occasionally some pertinent document embedding vectors 315 of FIG. 3 might be stored in memory 115 of FIG. 1 and some might be stored on storage device 120. In such situations, local accelerator 135 of FIG. 1 may process the pertinent document embedding vectors 315 of FIG. 3 stored in memory 115 of FIG. 1, and storage accelerator 140 of FIG. 1 may process the pertinent document embedding vectors 315 of FIG. 3 that are stored on storage device 120 of FIG. 1, producing results 435 and 445, respectively based on the same query embedding vector 410.

Once results 43 5 and/or 445 have been produced by local accelerator 135 of FIG. 1 and/or storage accelerator 140 of FIG. 1, results 435 and/or 445 may be used to retrieve the appropriate documents, shown as document retrieval 450. If all pertinent document embedding vectors 315 of FIG. 3 were in memory 115 of FIG. 1, then storage accelerator 140 of FIG. 1 might not produce results 445, and document retrieval 450 may proceed based solely on results 435 (as shown by line 455). If all pertinent document embedding vectors 315 of FIG. 3 were on storage device 120 of FIG. 1, then local accelerator 135 of FIG. 1 might not produce results 435, and document retrieval 450 may proceed based solely on results 445 (as shown by line 460). But if the pertinent document embedding vectors were stored in both memory 115 of FIG. 1 and storage device 120 of FIG. 1, then local accelerator 135 of FIG. 1 and storage accelerator 140 of FIG. 1 may each produce results 435 and 445, respectively. In that case, results 435 and 445 may be combined and ranked, as shown at block 465. By combining and ranking results 435 and 445, the most pertinent documents 305 of FIG. 3 may be identified from both results 435 and 445 for document retrieval 450.

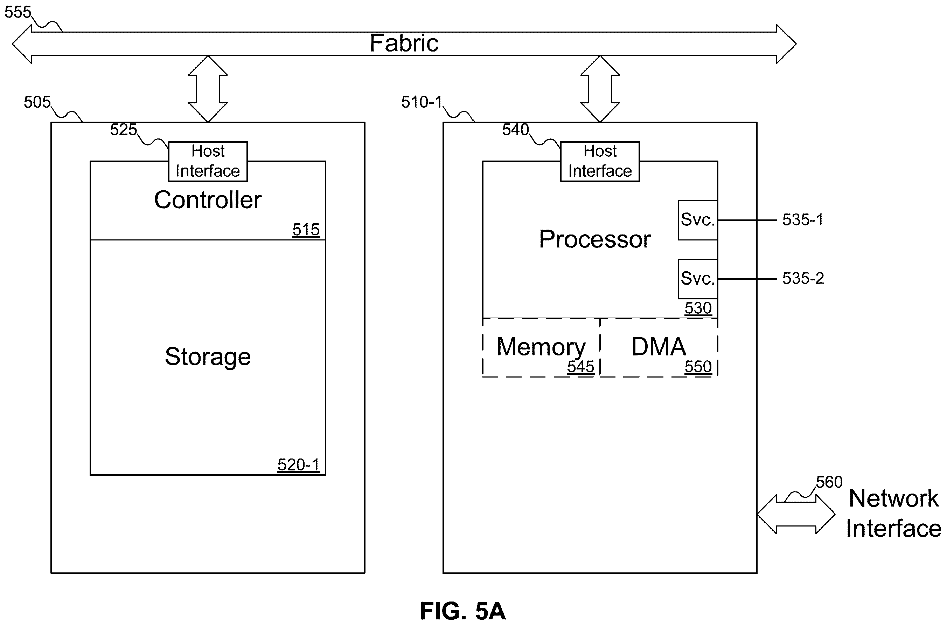

In some embodiments of the disclosure, storage accelerator 140 of FIG. 1 may be replaced with a computational storage unit. A computational storage unit may be thought of as a more general concept than an accelerator (although in some embodiments, a computational storage unit might offer the same functionality as accelerator 140 of FIG. 1). FIGs. 5A-5D illustrate various implementations of computational storage units.

FIGs. 5A-5D shows example implementations of a computational storage unit implementing accelerator 140 of FIG. 1, according to embodiments of the disclosure. In FIG. 5A, storage device 505 and computational device 510-1 are shown. Storage device 505 may include controller 515 and storage 520-1, and may be reachable across a host protocol interface, such as host interface 525. Host interface 525 may be used both for management of storage device 505 and to control I/O of storage device 505. An example of host interface 525 may include queue pairs for submission and completion, but other host interfaces 525 are also possible, using any native host protocol supported by storage device 505.

Computational device 510-1 may be paired with storage device 505. Computational device 510-1 may include any number (one or more) processors 530, which may offer one or more services 535-1 and 535-2. To be clearer, each processor 530 may offer any number (one or more) services 535-1 and 535-2 (although embodiments of the disclosure may include computational device 510-1 including exactly two services 535-1 and 535-2). Each processor 530 may be a single core processor or a multi-core processor. Computational device 510-1 may be reachable across a host protocol interface, such as host interface 540, which may be used for both management of computational device 510-1 and/or to control I/O of computational device 510-1. As with host interface 525, host interface 540 may include queue pairs for submission and completion, but other host interfaces 540 are also possible, using any native host protocol supported by computational device 510-1. Examples of such host protocols may include Ethernet, RDMA, TCP/IP, InfiniBand, iSCSI, PCIe, SAS, and SATA, among other possibilities. In addition, host interface 540 may support communications with other components of system 105 of FIG. 1-for example, a NIC, if the NIC is not connected to multi-function device 135 of FIG. 1-or to operate as a NIC and communicate with local and/or remote network/cloud components.

Processor(s) 530 may be thought of as near-storage processing: that is, processing that is closer to storage device 505 than processor 110 of FIG. 1. Because processor(s) 530 are closer to storage device 505, processor(s) 530 may be able to execute commands on data stored in storage device 505 more quickly than for processor 110 of FIG. 1 to execute such commands. Processor(s) 530 may have associated memory 545, which may be used for local execution of commands on data stored in storage device 505. Memory 545 may be accessible by DMA from devices other than computational device 510-1. Memory 545 may include local memory similar to memory 115 of FIG. 1, on-chip memory (which may be faster than memory such as memory 115 of FIG. 1, but perhaps more expensive to produce), or both. Memory 545 may be omitted, as shown by the dashed lines.

Computational device 510-1 may also include DMA 550. DMA 550 may be a circuit that enables storage device 505 to execute DMA commands in a memory outside storage device 505. For example, DMA 550 may enable storage device 505 to read data from or write data to memory 115 of FIG. 1 or a memory in computational device 510-1. DMA 550 may be omitted, as shown by its representation using dashed lines.

While FIG. 5A shows storage device 505 and computational device 510-1 as being separately reachable across fabric 555, embodiments of the disclosure may also include storage device 505 and computational device 510-1 being serially connected, or sharing multi-function device 135 of FIG. 1 (as shown in FIG. 1). That is, commands directed to storage device 505 and computational device 510-1 might both be received at the same physical connection to fabric 555 and may pass through one device to reach the other. For example, if computational device 510-1 is located between storage device 505 and fabric 555, computational device 510-1 may receive commands directed to both computational device 510-1 and storage device 505: computational device 510-1 may process commands directed to computational device 510-1, and may pass commands directed to storage device 505. Similarly, if storage device 505 is located between computational device 510-1 and fabric 555, storage device 505 may receive commands directed to both storage device 505 and computational device 510-1: storage device 505 may process commands directed to storage device 505 and may pass commands directed to computational device 510-1 to computational device 510-1.

Services 535-1 and 535-2 may offer a number of different functions that may be executed on data stored in storage device 505. For example, services 535-1 and 535-2 may offer pre-defined functions, such as matrix multiplication, dot product computation, encryption, decryption, compression, and/or decompression of data, erasure coding, and/or applying regular expressions. Or, services 535-1 and 535-2 may offer more general functions, such as data searching and/or SQL (Structured Query Language) functions. Services 535-1 and 535-2 may also support running application-specific code. That is, the application using services 535-1 and 535-2 may provide custom code to be executed using data on storage device 505. Services 535-1 and 535-2 may also any combination of such functions. Table 1 lists some examples of services that may be offered by processor(s) 530.

Table 1: Service Types

| Compression |
|---|
| Encryption |

(continued)

| |
|---|
| Database filter |
| Erasure coding |
| RAID (Redundant Array of Independent Disk) |
| Hash/CRC |
| RegEx (pattern matching) |
| Scatter Gather |
| Pipeline |
| Video compression |
| Data deduplication |
| Operating System Image Loader |
| Container Image Loader |
| Berkeley packet filter (BPF) loader |
| FPGA Bitstream loader |
| Large Data Set |

Processor(s) 530 (and, indeed, computational device 510-1) may be implemented in any desired manner. Example implementations may include a local processor, such as a Central Processing Unit (CPU) or some other processor (such as a Field Programmable Gate Array (FPGA), an Application-Specific Integrated Circuit (ASIC), or a System-on-a-Chip(SoC)), a Graphics Processing Unit (GPU), a General Purpose GPU (GPGPU), a Data Processing Unit (DPU), a Neural Processing Unit (NPU), a Network Interface Card (NIC), or a Tensor Processing Unit (TPU), among other possibilities. If computational device 510-1 includes more than one processor 530, each processor may be implemented as described above. For example, computational device 510-1 might have one each of CPU, TPU, and FPGA, or computational device 510-1 might have two FPGAs, or computational device 510-1 might have two CPUs and one ASIC, etc.

Depending on the desired interpretation, either computational device 510-1 or processor(s) 530 may be thought of as a computational storage unit.

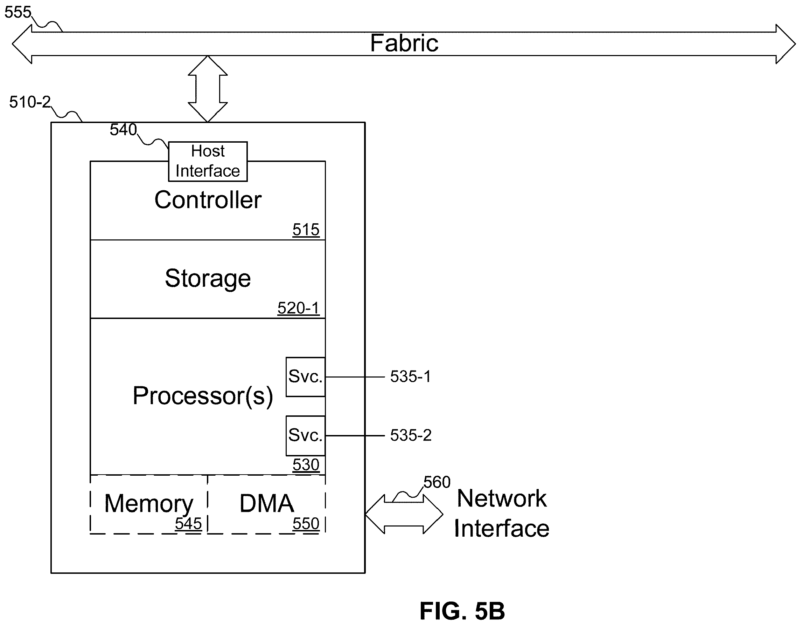

Some embodiments of the disclosure may include other mechanisms to communicate with storage device 505 and/or computational device 510-1. For example, storage device 505 and/or computational device 510-1 may include network interface 560, which may support communication with other devices using Ethernet, RDMA, TCP/IP, InfiniBand, SAS, iSCSI, or SATA, among other possibilities. Network interface 560 may provide another interface for communicating with storage device 505 and/or computational device 510-1. While FIG. 5A shows network interface 560 as providing communication to computational device 510-1, embodiments of the disclosure may include a network interface to storage device 505 as well. In addition, in some embodiments of the disclosure, such other interfaces may be used instead of host interfaces 525 and/or 540 (in which case host interfaces 525 and/or 540 may be omitted). Other variations, shown in FIGs. 5B-5D below, may also include such interfaces.

Whereas FIG. 5A shows storage device 505 and computational device 510-1 as separate devices, in FIG. 5B they may be combined. Thus, computational device 510-2 may include controller 515, storage 520-1, processor(s) 530 offering services 535-1 and 535-2, memory 545, and/or DMA 550. As with storage device 505 and computational device 510-1 of FIG. 5A, management and I/O commands may be received via host interface 540 and/or network interface 560. Even though computational device 510-2 is shown as including both storage and processor(s) 530, FIG. 5B may still be thought of as including a storage device that is associated with a computational storage unit.

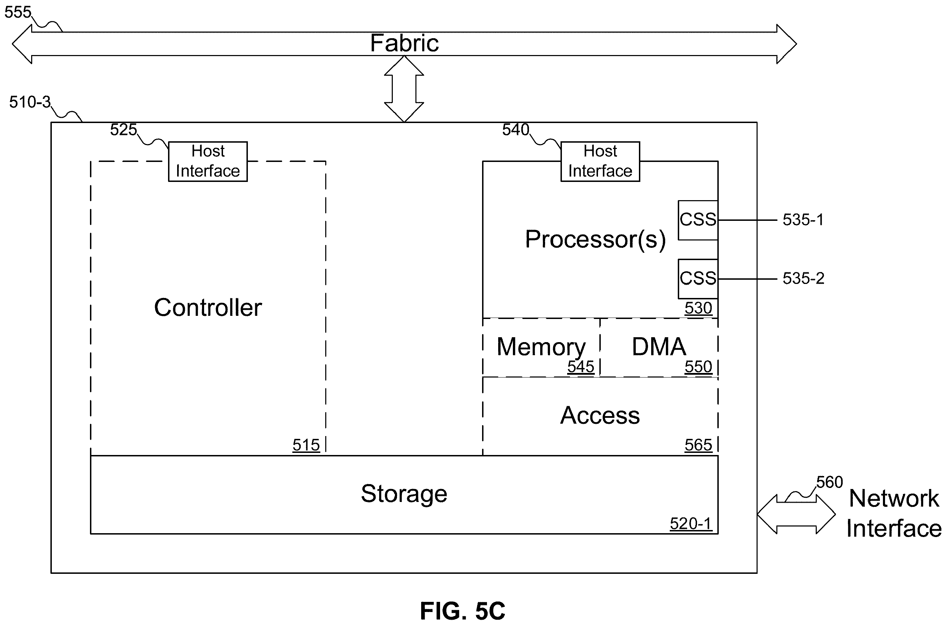

In yet another variation shown in FIG. 5C, computational device 510-5 is shown. Computational device 510-3 may include controller 515 and storage 520-1, as well as processor(s) 530 offering services 535-1 and 535-2, memory 545, and/or DMA 550. But even though computational device 510-3 may be thought of as a single component including controller 515, storage 520-1, processor(s) 530 (and also being thought of as a storage device associated with a computational storage unit), memory 545, and/or DMA 550, unlike the implementation shown in FIG. 5B controller 515 and processor(s) 530 may each include their own host interfaces 525 and 540 and/or network interface 560 (again, which may be used for management and/or I/O). By including host interface 525, controller 515 may offer transparent access to storage 520-1 (rather than requiring all communication to proceed through processor(s) 530).

In addition, processor(s) 530 may have access 565 to storage 520-1. Thus, instead of routing access requests through controller 515, processor(s) 530 may be able to directly access the data from storage 520-1 using access 565.

In FIG. 5C, both controller 515 and access 565 are shown with dashed lines to represent that they are optional elements, and may be omitted depending on the implementation.

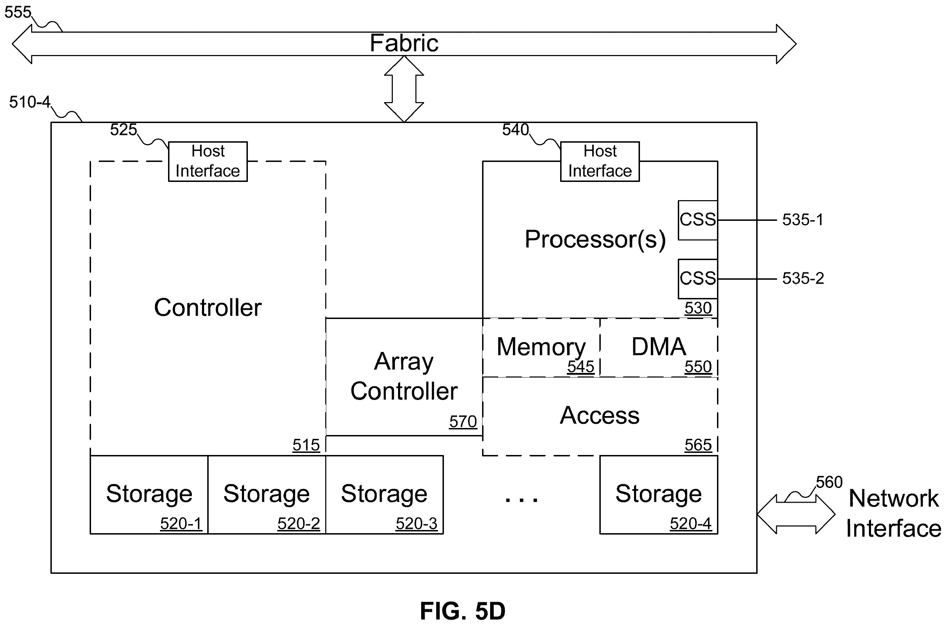

Finally, FIG. 5D shows yet another implementation. In FIG. 5D, computational device 510-4 is shown, which may include controller 515, memory 545, DMA 550, and access 565 similar to FIG. 5C. In addition, computational device 510-4 may include an array of one or more storage 520-1 through 520-4. While FIG. 5D shows four storage elements, embodiments of the disclosure may include any number (one or more) of storage elements. In addition, the individual storage elements may be other storage devices, such as those shown in FIGs. 5A-5D.

Because computational device 510-4 may include more than one storage element 520-1 through 520-4, computational device 510-4 may include array controller 570. Array controller 570 may manage how data is stored on and retrieved from storage elements 520-1 through 520-4. For example, if storage elements 520-1 through 520-4 are implemented as some level of a Redundant Array of Independent Disks (RAID), array controller 570 may be a RAID controller. If storage elements 520-1 through 520-4 are implemented using some form of Erasure Coding, then array controller 570 may be an Erasure Coding controller.

While the above discussion focuses on the implementation of storage device 120 of FIG. 1 and storage accelerator 140 of FIG. 1, the implementation of local accelerator 135 of FIG. 1 may be similar to the implementation of storage accelerator 140 of FIG. 1. Thus, local accelerator 135 of FIG. 1 may be implemented using a CPU, an FPGA, an ASIC, an SoC, a GPU, a GPGPU, a DPU, an NPU, a TPU, or a NIC, as desired.

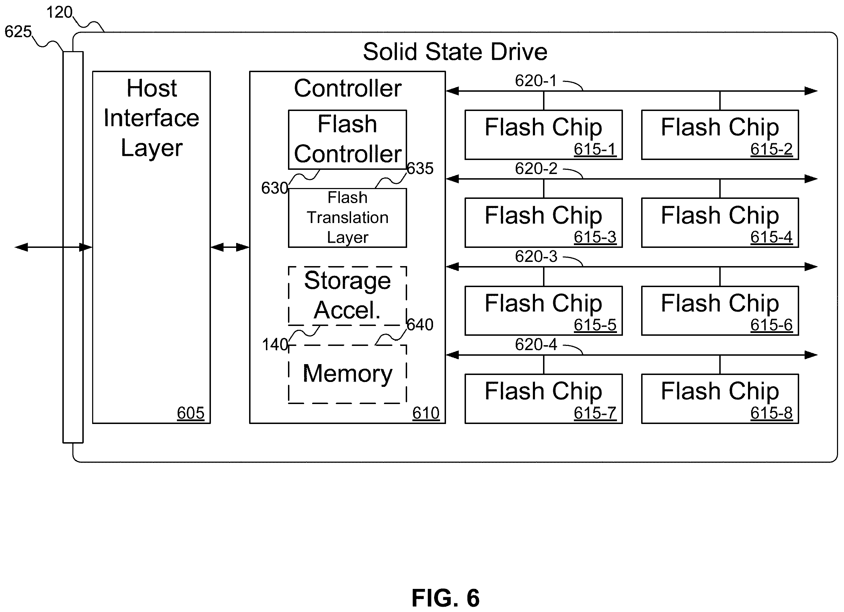

FIG. 6 shows details of storage device 120 of FIG. 1, according to embodiments of the disclosure. In FIG. 6, the implementation of storage device 120 is shown as for a Solid State Drive (SSD), but embodiments of the disclosure may include other implementations, such as a hard disk drive. In FIG. 6, storage device 120 may include host interface layer (HIL) 605, controller 610, and various flash memory chips 615-1 through 615-8 (also termed "flash memory storage"), which may be organized into various channels 620-1 through 620-4. Host interface layer 605 may manage communications between storage device 120 and other components (such as processor 110 of FIG. 1). Host interface layer 605 may also manage communications with devices remote from storage device 120: that is, devices that are not considered part of multi-function device 135 of FIG. 1, but in communication with storage device 120: for example, over one or more network connections. These communications may include read requests to read data from storage device 120, write requests to write data to storage device 120, and delete requests to delete data from storage device 120.

Host interface layer 605 may manage an interface across only a single port, or it may manage interfaces across multiple ports. Alternatively, storage device 120 may include multiple ports, each of which may have a separate host interface layer 605 to manage interfaces across that port. Embodiments of the inventive concept may also mix the possibilities (for example, an SSD with three ports might have one host interface layer to manage one port and a second host interface layer to manage the other two ports). Host interface layer 605 may communicate with other components across connection 625, which may be, for example, a PCIe connection, an M.2 connection, a U.2 connection, a SCSI connection, or a SATA connection, among other possibilities.

Controller 610 may manage the read and write operations, along with garbage collection and other operations, on flash memory chips 615-1 through 615-8 using flash memory controller 630. SSD controller 610 may also include flash translation layer 635, storage accelerator 140, or memory 640. Flash translation layer 635 may manage the mapping of logical block addresses (LBAs) (as used by host 110 of FIG. 1) to physical block addresses (PBAs) where the data is actually stored on storage device 120. By using flash translation layer 635, host 110 of FIG. 1 does not need to be informed when data is moved from one block to another within storage device 120.

Storage accelerator 140 may be the same as accelerator 140 of FIG. 1, but implemented within controller 610 rather than being external to storage device 120. Storage accelerator 140 may be omitted (for example, when implemented externally to storage device 120), as shown by its representation using dashed lines.

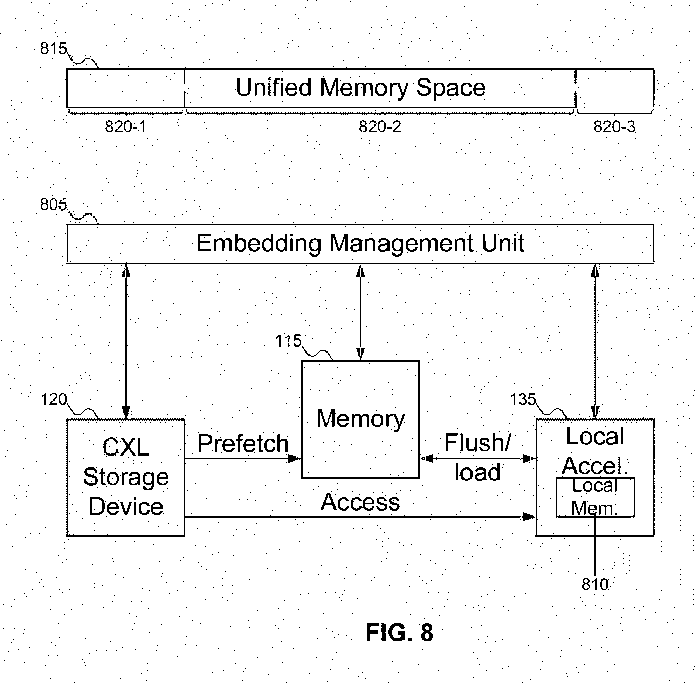

Memory 640 may be a local memory, such as a DRAM, used by storage controller 610. Memory 640 may be a volatile or non-volatile memory. Memory 640 may also be accessible via DMA from devices other than storage device 120: for example, computational storage unit 140 of FIG. 1. Memory 640 may also be used to store data for access using memory protocols in storage devices 120 that permit such access. For example, a cache-coherent interconnect storage device may permit accessing data as though the storage device was an extension of memory 115 of FIG. 1. Cache-coherent interconnect storage devices are discussed further with reference to FIG. 8 below. Memory 640 may be omitted, as shown by its representation using dashed lines.

While FIG. 6 shows storage device 120 as including eight flash memory chips 615-1 through 615-8 organized into four channels 620-1 through 620-4, embodiments of the inventive concept may support any number of flash memory chips organized into any number of channels. Similarly, while FIG. 6 shows the structure of a SSD, other storage devices (for example, hard disk drives) may be implemented using a different structure from that shown in FIG. 6 to manage reading and writing data, but with similar potential benefits.

While FIG. 6 shows storage device 120 as being just a storage device, embodiments of the disclosure may include other components within storage device 120. For example, storage device 120 might have its own computational storage unit, which might be used by processor 110 of FIG. 1 (or other devices attached to multi-function device 135 of FIG. 1).

As discussed with reference to FIG. 4 above, storage accelerator 140 of FIG. 1 may perform similarity search 440 of FIG. 4 based on query embedding vector 410 of FIG. 4 and document embedding vectors 315 of FIG. 3 that are stored on storage device 120 of FIG. 1. Because query 405 of FIG. 4 involved some document embedding vectors 315 of FIG. 3 that are stored on storage device 120 of FIG. 1, it is reasonable to expect that upcoming queries 405 of FIG. 4 might also use some of the same document embedding vectors 315 of FIG. 3 that are stored on storage device 120 of FIG. 1. While storage accelerator 140 of FIG. 1 may be able to process such additional queries 405 of FIG. 4, local accelerator 1405 of FIG. 1, operating based on document embedding vectors 315 of FIG. 3 stored in memory 115 of FIG. 1 may be able to process such queries 405 of FIG. 4 faster than storage accelerator 140 of FIG. 1 based on document embedding vectors 315 of FIG. 3 stored on storage device 120 of FIG. 1. Thus, migrating those document embedding vectors 315 of FIG. 3 from storage device 120 of FIG. 1 to memory 115 of FIG. 1 may be worthwhile for the improved performance.

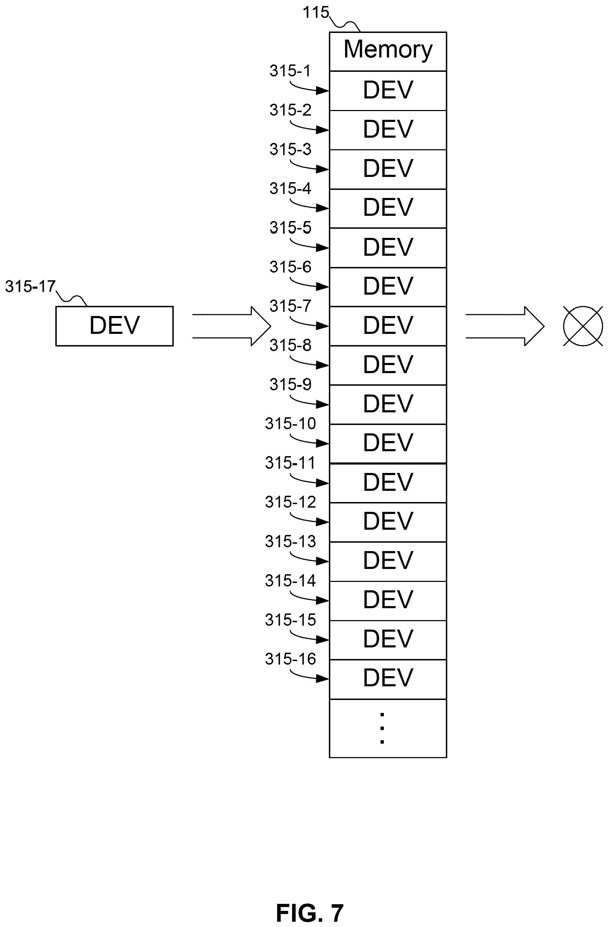

FIG. 7 shows memory 115 of FIG. 1, with document embedding vector 315 of FIG. 3 being evicted to make room for another document embedding vector 315 of FIG. 3, according to embodiments of the disclosure. In FIG. 7, memory 115 is shown as including 16 document embedding vectors 315-1 through 315-16. For purposes of this example, memory 115 may be considered completely full, but embodiments of the disclosure may fill memory 115 with more or less than 16 document embedding vectors 315. In addition, as discussed below, memory 115 might not be full: that is, memory 115 might have room for an additional document embedding vector 315.

Processor 110 of FIG. 1 (or local accelerator 135 of FIG. 1) has selected document embedding vector 315-17 to be loaded into memory 115. For example, document embedding vector 315-17 might be a document embedding vector used in responding to one (or more) recent queries 405 of FIG. 4. Document embedding vector 315-17 may be selected to be loaded into memory 115 using any desired strategy: for example, document embedding vector 315-17 might be selected using either a Most Recently Used (MRU) or a Most Frequently Used (MFU) selection policy. Because memory 115 is currently full, processor 110 of FIG. 1 (or local accelerator 135 of FIG. 1) may select a document embedding vector, such as document embedding vector 315-7, for eviction from memory 115. By evicting document embedding vector 315-7 from memory 115, space may be created to store document embedding vector 315-17 in memory 115, after which document embedding vector 315-17 may be loaded into memory 115 (where document embedding vector 315-7 used to be stored).

In some embodiments of the disclosure, document embedding vectors 315 may be expected to remain unchanged (since the underlying documents may be expected to remain unchanged). Thus, in evicting document embedding vector 315-7 from memory 115, document embedding vector 315-7 may be deleted upon eviction. But in embodiments of the disclosure where document embedding vectors 315 may change, evicting document embedding vector 315-7 from memory 115 may involve writing updated document embedding vector 315-7 to storage device 120 of FIG. 1 (so that updated document embedding vector is not lost).

As mentioned above, the description of FIG. 7 above assumes that memory 115 is full, and evicting document embedding vector 315-7 from memory 115 is necessary to make room to load document embedding vector 315-17. But if memory 115 is not full-that is, memory 115 has room for document embedding vector 315-17 without evicting document embedding vector 315-7, or any other document embedding vector 315, from memory 115-then document embedding vector 315-17 may be loaded into memory 115 without first evicting a currently-stored document embedding vector 315.

The above-described embodiments of the disclosure all operate on the principle that if document embedding vector 315 of FIG. 3 is stored on storage device 120 of FIG. 1, that storage accelerator 140 of FIG. 1 may process query embedding vector 410 of FIG. 4 and the document embedding vector 315 of FIG. 3. But there are other approaches that may be used that may avoid the need for storage accelerator 140 of FIG. 1. FIG. 8 illustrates some such embodiments of the disclosure.

FIG. 8 shows an Embedding Management Unit (EMU) managing the storage of document embedding vectors 315 of FIG. 3 in storage device 120 of FIG. 1, memory 115 of FIG. 1, and a local memory of the local accelerator of FIG. 1, according to embodiments of the disclosure. In FIG. 8, Embedding Management Unit (EMU) 805 may track where each document embedding vector 315 of FIG. 3 is stored, and may move document embedding vectors 315 of FIG. 3 as needed. Since local accelerator 135 may be responsible for all processing of query embedding vector 410 of FIG. 4 and document embedding vectors 315 of FIG. 3, storage accelerator 140 of FIG. 1 may be omitted.

Local accelerator 135 may include local memory 810. Local memory 810 may be a memory local to local accelerator 135 and may be distinct from memory 115. Local accelerator 135 may process queries 405 of FIG. 4 using document embedding vectors stored in local memory 810, rather than memory 115: but other than changing from where local accelerator 135 accesses document embedding vectors 315 of FIG. 3, local accelerator 135 is otherwise unchanged from the above description. (In addition, the embodiments of the disclosure described above may also have local accelerator 135 include local memory 810 for processing queries 405 of FIG. 4, whether or not so described.)

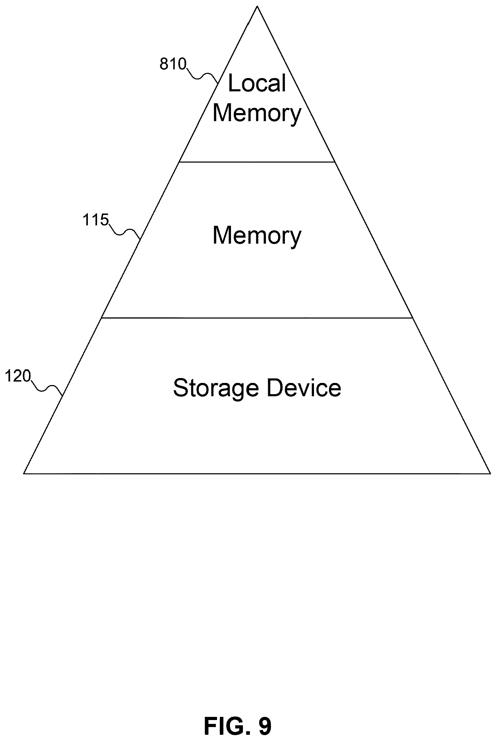

Local memory 810, memory 115, and storage device 120 may be thought of as a hierarchy of locations in which document embedding vectors 315 of FIG. 3 may be stored. Local memory 810 may be the fastest location from which to access document embedding vectors 315 of FIG. 3, as it is closest to local accelerator 135 and may be the fastest memory type (for example, SRAM or some form of cache memory). But local memory 810 may also be the most expensive form of memory per unit, and therefore may be permit the storage of the fewest number of document embedding vectors 315 of FIG. 3. Memory 115 may be slower than local memory 810 (because it may be a slower memory type, such as DRAM, or because the latency to access memory 115 may be higher than the latency to access local memory 810), but may be faster than storage device 120. Accordingly, the cost per unit of memory 115 may be less than that of local memory 810, and the capacity of memory 115 may be greater than the capacity of local memory 810 for the same cost. Finally, storage device 120 may be the slowest type of storage to access (for example, an SSD or a hard disk drive), but may have the lowest cost per unit, and therefore offer the greatest overall storage capacity. Local memory 810, memory 115, and storage device 120 may be thought of as a pyramid, as shown in FIG. 9.

Returning to FIG. 8, it is desirable to store document embedding vectors 315 of FIG. 3 in the fastest available form of storage (such as local memory 810). But since the cost of the fastest form of storage may be significant, then for a given amount of capital, either the overall capacity of machine 105 of FIG. 1 may be reduced (by only using the fastest, most expensive type of memory). Alternatively, the overall capacity of machine 105 of FIG. 1 may be increased by only using the cheapest, slowest form of storage device, but at the cost of the overall speed of query processing of machine 105 of FIG. 1. A balance between the two approaches may be more cost-effective.

By including local memory 810, memory 115, and storage device 120, it may be possible to strike an overall balance between cost, capacity, and speed. But operating on the assumption that local accelerator 135 of FIG. 1 may access document embedding vectors 315 of FIG. 3 only from local memory 810 (because that is the fastest form of memory), EMU 805 may be introduced to manage the locations of document embedding vectors 315 of FIG. 3. EMU 805 may move document embedding vectors between local memory 810, memory 115, and storage device 120, as appropriate. To that end, EMU 805 may communicate with local memory 810, memory 115, and storage device 120, as shown.

EMU 805 may track the location of every document embedding vector 315 of FIG. 3. For example, EMU 805 may include a table that associates an identifier of a document embedding vector 315 of FIG. 3 with one (or more) of local memory 810, memory 115, and storage device 120. But rather than tracking the location of all document embedding vectors 315 of FIG. 3 in this manner, EMU 805 might only track document embedding vectors 315 of FIG. 3 that are stored in either local memory 810 and memory 115. Recall that document embedding vectors 315 of FIG. 3 may be stored on storage device 120. Since document embedding vectors 315 of FIG. 3 are not expected to change, document embedding vectors 315 may be stored on storage device even if copied to local memory 810 or memory 115. Thus, every document embedding vector 315 of FIG. 3 may be stored on storage device 120: if a document embedding vector 315 of FIG. 3 is not indicated as being stored anywhere else (in addition to storage device 120), then EMU 805 may assume that document embedding vector 315 of FIG. 3 is only stored on storage device 120. Thus, EMU 805 might only track document embedding vectors that are currently stored in local memory 810 or memory 115.

When query embedding vector 410 of FIG. 4 is to be processed using similarity search 430 of FIG. 4, EMU 805 may determine where the relevant document embedding vectors 315 of FIG. 3 are stored. If the relevant document embedding vectors are not currently in local memory 810, EMU 805 may cause the relevant document embedding vectors 315 of FIG. 3 to be moved into local memory 810. This may involve copying document embedding vectors 315 of FIG. 3 from storage device 120 into local memory 810, or moving document embedding vector 315 of FIG. 3 from memory 115 to local memory 810. If local memory 810 currently does not have space for the document embedding vector 315 of FIG. 3 being loaded into local memory 810, then an existing document embedding vector 315 of FIG. 3 may be evicted from local memory 810 to make room for the new document embedding vector 315 of FIG. 3 to be loaded into local memory 810.

To evict document embedding vector 315 of FIG. 3 from local memory 810, a document embedding vector 315 of FIG. 3 may be selected similar to how document embedding vector 315-7 of FIG. 7 was selected for eviction. The differences are that instead of document embedding vector 315-17 of FIG. 7 being added to memory 115, document embedding vector 315-17 of FIG. 7 is being added to local memory 810, and instead of discarding document embedding vector 315-7 of FIG. 7 after eviction from local memory 810, document embedding vector 315-7 of FIG. 7 may be flushed to memory 115 (that is, document embedding vector 315-7 of FIG. 7 may be stored in memory 115 rather than being discarded). If memory 115 does not have room for the document embedding vector 315 of FIG. 3 being flushed from local memory 810, then a process similar to that described with respect to FIG. 7 may be performed to evict a document embedding vector 315 of FIG. 3 from memory 115 (but in that case, the document embedding vector 315 of FIG. 3 evicted from memory 115 may be discarded rather than flushed back to storage device 120).

In addition, EMU 805 may prefetch document embedding vectors 315 of FIG. 3 from storage device 120 into memory 115. For example, EMU 805 may analyze recent queries 405 of FIG. 4 and the relevant document embedding vectors 315 of FIG. 3 used to answer those queries 405 of FIG. 4. Based on the document embedding vectors 315 of FIG. 3 used to address recent queries 405 of FIG. 4, EMU 805 may identify certain document embedding vectors 315 of FIG. 3 that are expected to be used in upcoming queries 405 of FIG. 4. For example, EMU 805 might include a threshold percentage or a threshold number. With reference to document embedding vectors 315 of FIG. 3 that were used to answer recent queries 405 of FIG. 4, EMU 805 may select the threshold percentage or threshold number of such document embedding vectors 315 of FIG. 3 for prefetching.

Another approach for prefetching document embedding vectors 315 of FIG. 3 might be to use another retriever, such as a lexical retriever, which might be fast but not necessarily return accurate results. Such a retriever may be used to generate a candidate list of documents 305 of FIG. 3 (or document embedding vectors 315 of FIG. 3), whose document embedding vectors 315 of FIG. 3 may be prefetched. These prefetched document embedding vectors 315 of FIG. 3 may then be available in memory 115 for comparison with query embedding vector 410 of FIG. 4 as described above, saving time as compared with loading document embedding vectors 315 of FIG. 3 from storage device 120.

By prefetching those document embedding vectors 315 of FIG. 3 from storage device 120 into memory 115, it may be possible to move those document embedding vectors 315 of FIG. 3 into local memory 810 faster if those document embedding vectors 315 of FIG. 3 are used in response to future queries 405 of FIG. 4. In some embodiments of the disclosure, rather than prefetching document embedding vectors 315 of FIG. 3 into memory 115, EMU 805 may prefetch document embedding vectors 315 of FIG. 3 into local memory 810 (for example, if there is room in local memory 810 for document embedding vectors 315 of FIG. 3).

When document embedding vectors 315 of FIG. 3 are to be moved between local memory 810, memory 115, and storage device 120, EMU 805 may use any desired policy to select which document embedding vectors 315 of FIG. 3 are to be moved in or out of the respective components. In addition, EMU 805 may use different policies to select which document embedding vectors 315 of FIG. 3 to move. For example, EMU 805 may use one policy to select which document embedding vectors 315 of FIG. 3 to move into local memory 810, another policy to select which document embedding vectors 315 of FIG. 3 to move out of local memory 810, a third policy to select which document embedding vectors 315 of FIG. 3 to move into memory 115, and a fourth policy to select which document embedding vectors 315 of FIG. 3 to move out of memory 115. These policies may include LFU, LRU, MFU, and MRU policies, among other possibilities.

In some embodiments of the disclosure, local accelerator 135 may function with the assumption that the relevant document embedding vectors 315 of FIG. 3 are stored in local memory 810, leaving it to EMU 805 to ensure that the relevant document embedding vectors 315 of FIG. 3 are actually in local memory 810. But in other embodiments of the disclosure, local accelerator 135 may access relevant document embedding vectors 315 of FIG. 3 regardless of where they are stored. That is, local accelerator 135 may access document embedding vectors 315 of FIG. 3 from local memory 810, memory 115, and/or storage device 120, using EMU 805 to determine where the individual document embedding vectors 315 of FIG. 3 are located. EMU 805 may still move document embedding vectors 315 of FIG. 3 between local memory 810, memory 115, and storage device 120 as appropriate (for example, moving the most recently used document embedding vectors 315 of FIG. 3 into local memory 810 if they are not already there, prefetching document embedding vectors 315 of FIG. 3 into memory 115, and evicting document embedding vectors 315 of FIG. 3 from local memory 810 or memory 115 to make room for new incoming document embedding vectors 315 of FIG. 3), but otherwise might not be responsible for document embedding vector 315 of FIG. 3 migration. In addition, some embodiments of the disclosure may also use storage accelerator 140 of FIG. 1 to expedite processing of queries 405 of FIG. 4 involving document embedding vectors 315 of FIG. 3 stored on storage device 120.

In some embodiments of the disclosure, storage device 120 of FIG. 1 may be a cache-coherent interconnect storage device. For example, storage device 120 of FIG. 1 may support CXL protocols for accessing data from storage device 120 of FIG. 1. In such embodiments of the disclosure, storage accelerator 140 of FIG. 1 may still be used. But cache-coherent interconnect storage devices may permit the data stored thereon to be accessed as though the cache-coherent interconnect storage devices are memory. But to understand how cache-coherent interconnect storage devices, and particularly how cache-coherent interconnect SSDs, operate, it is important to understand how SSDs work themselves.

There are two forms of non-volatile flash memory used in flash chips, such as flash chips 615 of FIG. 6: NOR flash and NAND flash. Because of how it is implemented, NOR flash may permit data to be written at the individual byte or even bit level, the number of connections needed is large, making NOR flash potentially complex to implement. Thus, most SSDs use NAND flash. NAND flash reduces the number of connections within the chip, making the implementation potentially simpler. But because the transistors (cells, storing data) may be connected in series, data may be written or read more than one transistor at a time. The typical arrangement is for data to be written or read in units called pages, which may include, for example, 4096 or 8192 bytes of data. Thus, to access particular byte, an entire page may be read, then the desired byte may be isolated.

In addition, SSDs may permit data to be written or read in units of blocks, but SSDs may not permit data to be overwritten. Thus, to change data in a page, the old data may be read into memory 640 of FIG. 6, updated appropriately, and then written to a new page on the SSD, with the old page is marked as invalid, subject to later collection.

To collect the invalid pages, an SSD may erase the data thereon. But the implementation of SSDs may only permit data to be erased in units called blocks, which may include some number of pages. For example, a block may include 128 or 256 pages. Thus, an SSD might not erase a single page at a time: the SSD might erase all the pages in a block. (Incidentally, while NOR flash may permit reading or writing data at the byte or even bit level, erasing data in NOR flash is also typically done at the block level, since erasing data may affect adjacent cells.)

While the above discussion describes pages as having particular sizes and blocks as having particular numbers of pages, embodiments of the disclosure may include pages of any desired size without limitation, and any number of pages per block without limitation.

Because SSDs, and NAND flash in particular, may not permit access to data at the byte level (that is, writing or reading data might not be done at a granularity below the page level), the process to access data at a smaller granularity is more involved, moving data into and out of memory 640 of FIG. 6. Cache-coherent interconnect SSDs leverage the use of memory 640 of FIG. 6 by supporting load and store commands similar to those used by memory 115. When a load or store command is received, the appropriate page may be loaded into memory 640 of FIG. 6 (if not already present), and data may be accessed from memory 640 of FIG. 6 essentially the same as if the data were in memory 115. When it is time to evict the page from memory 640 of FIG. 6, if the page has been updated (that is, the page is marked as dirty), the page may be written to a new page on the SSD, and the old page may be invalidated. (If the page being evicted as clean-that is, the data was not changed-then the page being evicted may simply be erased without concern for data loss, since the original page is still present on the SSD.) The SSD may use any desired policy for evicting pages from memory 640 of FIG. 6: for example, LFU or LRU policies may be used, among other possibilities.

To support byte access to data on the cache-coherent interconnect SSD, the SSD may provide a mapping between an address range, specified by processor 110 of FIG. 1 (or somewhere else within machine 105 of FIG. 1) and the supported capacity of the SSD. For example, if the SSD has a capacity of 100 GB, a 100 GB address range may be provided by processor 110 of FIG. 1 for use by the SSD. In this manner, the cache-coherent interconnect SSD may appear as an extension of memory 115. (Note that a cache-coherent interconnect SSD might support two different methods for accessing the same data: one using load and store commands through a memory protocol, and one using read and write commands through a file system input/output protocol.)

In addition to the cache-coherent interconnect SSD being viewed as an extension of memory 115, local memory 810 may also be viewed as an extension of memory 115. As seen in FIG. 8, unified memory space 815 may include various portions for memory 115, cache-coherent interconnect SSD 120, and local memory 810. For example, portion 820-1 may represent the portion of unified memory space 815 allocated to memory 115, portion 820-2 may represent the portion of unified memory space 815 allocated to cache-coherent interconnect SSD 120, and portion 820-3 may represent the portion of unified memory space 815 allocated to local memory 810. Portions 820-1 through 820-3 may have non-overlapping address ranges, so that given a particular address in unified memory space 815, the portion 820 including that particular address may be uniquely identified. (Note that embodiments of the disclosure may have unified memory space 815 including other portions 820 allocated to yet other devices: unified memory space 815 is not limited to exactly and only these three portions for memory 115, cache-coherent interconnect SSD 120, and local memory 810.)

By using unified memory space 815, EMU 805 may be able to determine where a particular document embedding vector 315 of FIG. 3 is currently stored. For example, if the address for document embedding vector 315 of FIG. 3 is in portion 820-1, then document embedding vector 315 of FIG. 3 may be in memory 115; if the address for document embedding vector 315 of FIG. 3 is in portion 820-2, then document embedding vector 315 of FIG. 3 may be in storage device 120; and if the address for document embedding vector 315 of FIG. 3 is in portion 820-3, then document embedding vector 315 of FIG. 3 may be in local memory 810. This approach may simplify how EMU 805 may determine where a particular document embedding vector 315 of FIG. 3 is located, and whether that document embedding vector 315 of FIG. 3 may need to be moved (for example, into local memory 810).

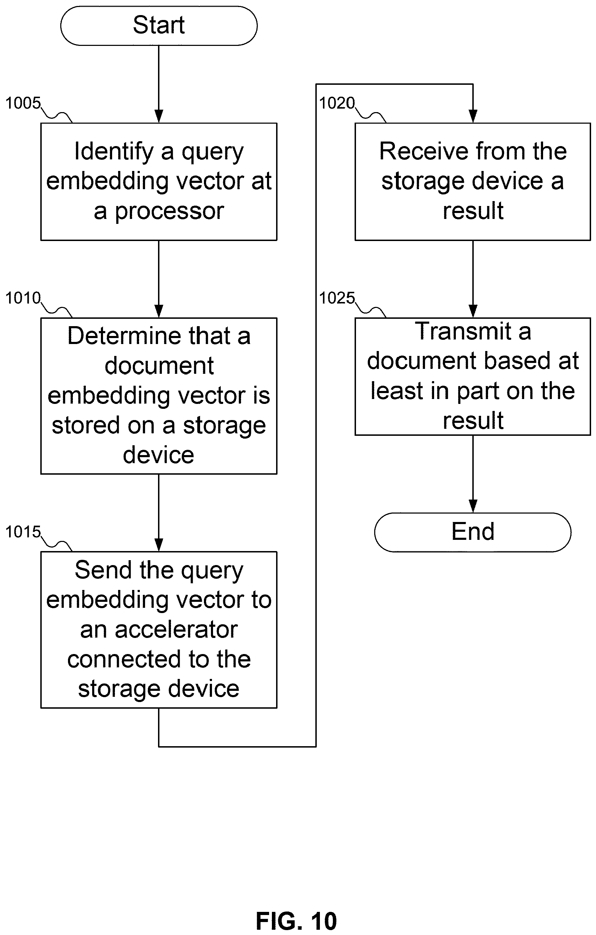

FIG. 10 shows a flowchart of an example procedure for storage accelerator 140 of FIG. 1 to process query 405 of FIG. 4 using document embedding vectors 315 of FIG. 3, according to embodiments of the disclosure. In FIG. 10, at block 1005, processor 110 of FIG. 1 may identify query embedding vector 410 of FIG. 4. (As discussed above, in some embodiments of the disclosure, processor 110 of FIG. 1 may be part or all of local accelerator 135 of FIG. 1: thus, a reference to processor 110 of FIG. 1, in FIG. 10 or elsewhere, may be understood as also or alternatively referencing local accelerator 135 of FIG. 1 and vice versa.) At block 1010, processor 110 of FIG. 1 may determine that a document embedding vector 315 of FIG. 3, which may be relevant to responding to query 405 of FIG. 4, is stored on storage device 120 of FIG. 1. At block 1015, processor 110 of FIG. 1 may send query embedding vector 410 of FIG. 4 to storage accelerator 140 of FIG. 1. At block 1020, processor 110 of FIG. 1 may receive result 445 of FIG. 4 from storage accelerator 140 of FIG. 1. Finally, at block 1025, processor 110 of FIG. 1 may send document 305 of FIG. 3 based on result 445 of FIG. 4 from storage accelerator 140 of FIG. 1.

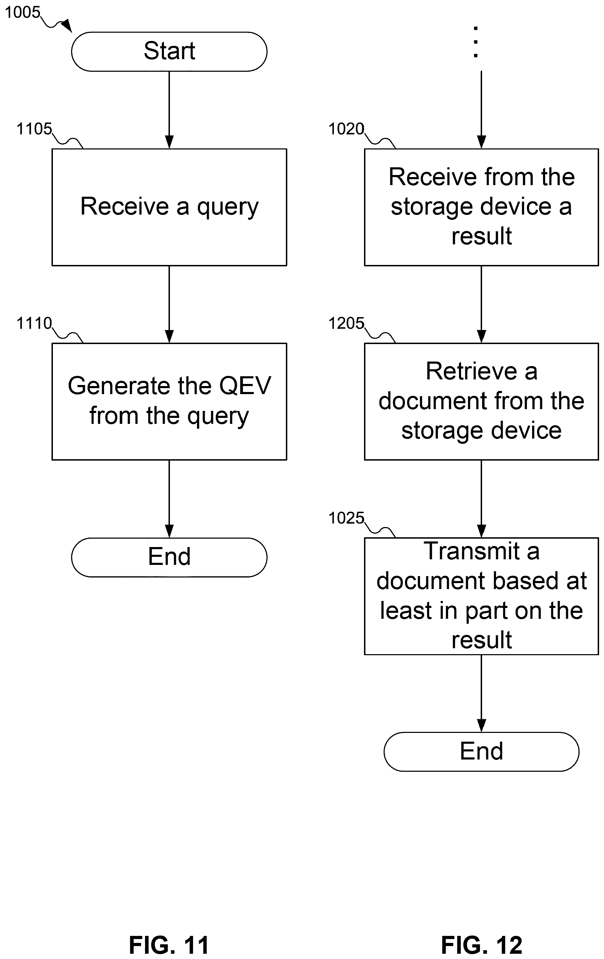

FIG. 11 shows a flowchart of an example procedure for generating query embedding vector 410 of FIG. 4 from query 405 of FIG. 4, according to embodiments of the disclosure. In FIG. 11, at block 1105, processor 110 of FIG. 1 may receive query 405 of FIG. 4. Query 405 of FIG. 4 may be sent by, for example, an application running on machine 105 of FIG. 1 or another host connected to machine 105 of FIG. 1. At block 1110, neural language module 310 of FIG.

3 may be used to generate query embedding vector 410 of FIG. 4 from query 405 of FIG. 4.

FIG. 12 shows a flowchart of an example procedure for storage accelerator 140 of FIG. 1 to return document 305 as a result of query 405 of FIG. 4, according to embodiments of the disclosure. In FIG. 12, at block 1205, processor 110 of FIG. 1 may retrieve document 305 of FIG. 3 from storage device 120 of FIG. 1. For context, block 1205 may be performed between block 1020 (where processor 110 of FIG. 1 receives result 445 of FIG. 4 from storage accelerator 140 of FIG. 1) and block 1025 (where processor 110 of FIG. 1 send document 305 of FIG. 3).

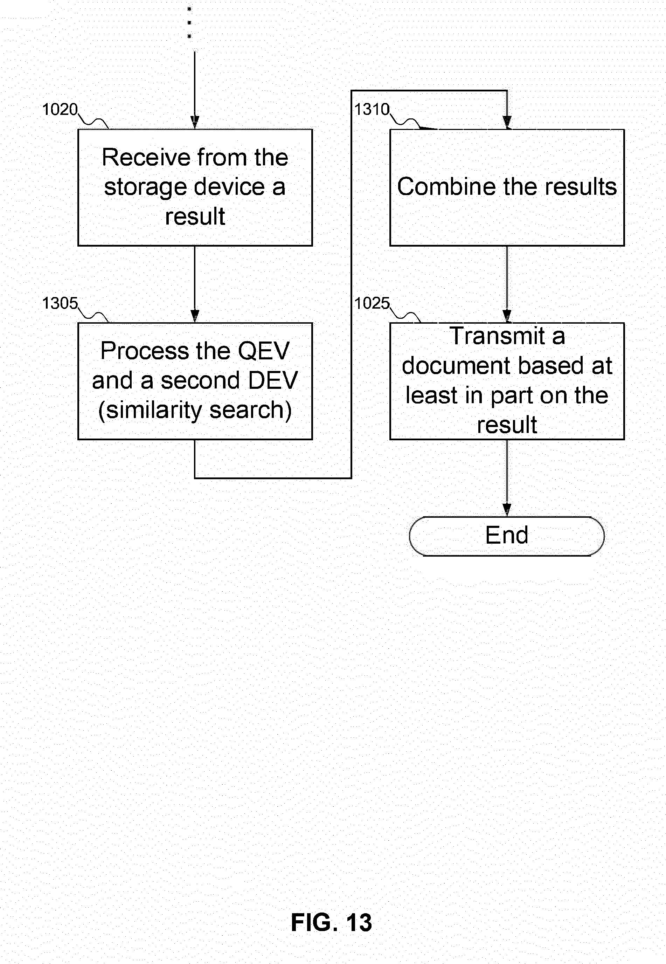

FIG. 13 shows a flowchart of an example procedure for local accelerator 135 of FIG. 1 combining its results with the results of storage accelerator 140 of FIG. 1, according to embodiments of the disclosure. In FIG. 13, at block 1305, local accelerator 135 of FIG. 1 may generate result 435 of FIG. 4, based on its processing of query embedding vector 410 of FIG. 4 and document embedding vector 315 of FIG. 3 (that is, performing similarity search 430 of FIG. 4). At block 1310, local accelerator 135 of FIG. 1 may combine and rank results 435 and 445 of FIG. 4, to produce a combined result. This combined result may then be used to identify a document to transmit based on the (combined) result. For context, blocks 1305 and 1310 may be performed between block 1020 (where processor 110 of FIG. 1 receives result 445 of FIG. 4 from storage accelerator 140 of FIG. 1) and block 1025 (where processor 110 of FIG. 1 send document 305 of FIG. 3).

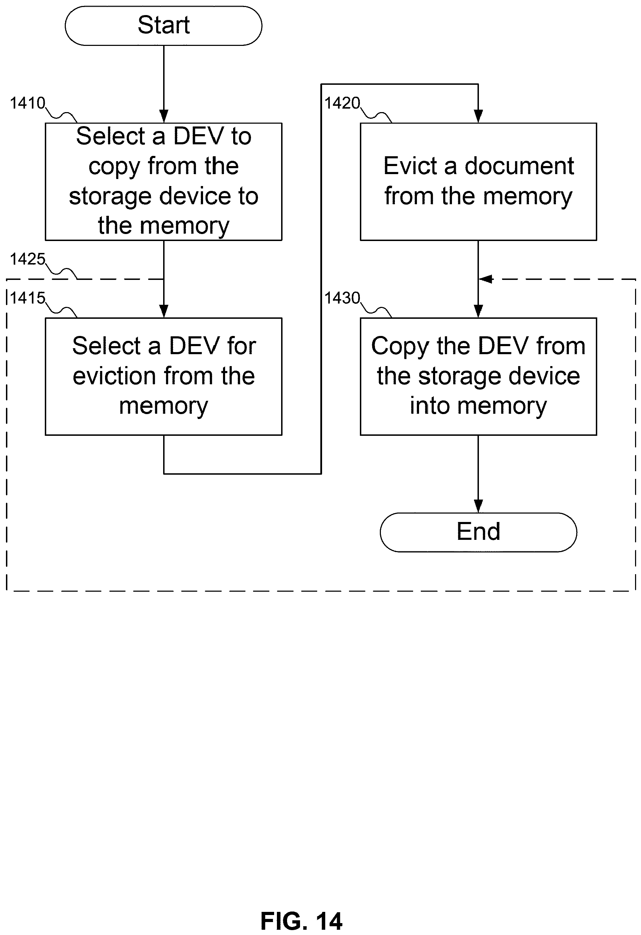

FIG. 14 shows a flowchart of an example procedure for local accelerator 135 of FIG. 1 copying document embedding vector 315 into memory 115 of FIG. 1, according to embodiments of the disclosure. In FIG. 14, at block 1410, local accelerator 135 of FIG. 1 may select document embedding vector 315 of FIG. 3 to store in memory 115 of FIG. 1. Local accelerator 135 of FIG. 1 may select document embedding vector 315 of FIG. 3 for loading into memory 115 of FIG. 1 using any desired selection policy. For example, the selection policy may be an MFU or MRU selection policy, among other possibilities. At block 1415, local accelerator 135 of FIG. 1 may select another document embedding vector 315 of FIG. 3 to evict from memory 115 of FIG. 1 (to make room for the document embedding vector 315 of FIG. 3 to be stored in memory 115 of FIG. 1, as selected in block 1410). Local accelerator 135 of FIG. 1 may select document embedding vector 315 of FIG. 3 for eviction from memory 115 of FIG. 1 using any desired eviction policy. For example, the eviction policy may be an LFU or LRU eviction policy, among other possibilities. At block 1420, local accelerator 135 of FIG. 1 may evict the document embedding vector 315 of FIG. 3 selected for eviction from memory 115 of FIG. 1 in block 1415. Note that blocks 1415 and 1420 may be omitted, as shown by dashed line 1425. Finally, at block 1430, local accelerator 135 of FIG. 1 may copy the document embedding vector 315 of FIG. 3 selected to be copied into memory 115 of FIG. 1 in block 1410 into memory 115 of FIG. 1.

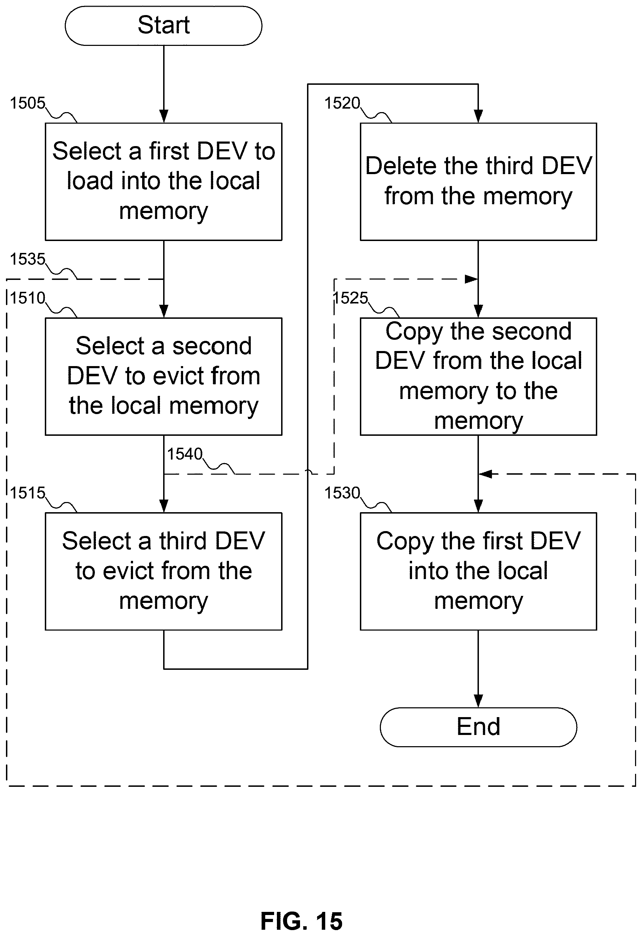

While FIG. 14 focuses on local accelerator 135 of FIG. 1 loading document embedding vectors 315 of FIG. 3 into memory 115 of FIG. 1 from storage device 120 of FIG. 1, FIG. 14 is also applicable for use by EMU 805 of FIG. 8 to load document embedding vector 315 of FIG. 3 into local memory 810 of FIG. 8 from either memory 115 of FIG. 1 or storage device 120 of FIG. 1, or to prefetch document embedding vector 315 of FIG. 3 from storage device 120 of FIG. 1 into memory 115 of FIG. 1. But to make this explicit (particularly where loading document embedding vector 315 of FIG. 3 involves evicting document embedding vectors 315 of FIG. 3 from both local memory 810 of FIG. 8 and memory 115 of FIG. 8), FIG. 15 illustrates this situation.

FIG. 15 shows a flowchart of an example procedure for EMU 805 of FIG. 8 to manage where document embedding vectors 315 of FIG. 3 are stored, according to embodiments of the disclosure. In FIG. 15, at block 1505, EMU 805 of FIG. 8 may select document embedding vector 315 of FIG. 3 to load into local memory 810 of FIG. 8. EMU 805 of FIG. 8 may select document embedding vector 315 of FIG. 3 to load into local memory 810 of FIG. 8 using any desired selection policy. For example, the selection policy may be an MFU or MRU selection policy, among other possibilities. At block 1510, EMU 805 of FIG. 8 may select another document embedding vector 315 of FIG. 3 to evict from local memory 810 of FIG. 8. EMU 805 of FIG. 8 may select document embedding vector 315 of FIG. 3 for eviction from local memory 810 of FIG. 8 using any desired eviction policy. For example, the eviction policy may be an LFU or LRU eviction policy, among other possibilities. At block 1515, EMU 805 of FIG. 8 may select yet another document embedding vector 315 of FIG. 3 to evict from memory 115 of FIG. 1. EMU 805 of FIG. 8 may select document embedding vector 315 of FIG. 3 for eviction from memory 115 of FIG. 1 using any desired eviction policy. For example, the eviction policy may be an LFU or LRU eviction policy, among other possibilities. In addition, the eviction policies used at blocks 1510 and 1515 may the same eviction policy, or they may be different eviction policies.

At block 1520, EMU 805 of FIG. 8 may evict (that is, delete) document embedding vector 315 of FIG. 3 from memory 115 of FIG. 1, as selected in block 1515. At block 1525, EMU 805 of FIG. 8 may evict (that is, flush or copy) document embedding vector 315 of FIG. 3 from local memory 810 of FIG. 8 to memory 115 of FIG. 1, as selected in block 1510. Finally, at block 1530, EMU 805 of FIG. 8 may copy document embedding vector 315 of FIG. 3 into local memory 810 of FIG. 1, as selected in block 1505.

If local memory 810 of FIG. 8 has room for document embedding vector 315 of FIG. 3, then there is no need to evict another document embedding vector 315 of FIG. 3 from local memory 810 of FIG. 8. In that case, blocks 1510, 1515, 1520, and 1525 may be omitted, as shown by dashed line 1535. Similarly, if memory 115 of FIG. 1 has room for the document embedding vector 315 of FIG. 3 being evicted from local memory 810 of FIG. 8 in block 1525, then blocks 1515 and 1520 may be omitted, as shown by dashed line 1540.

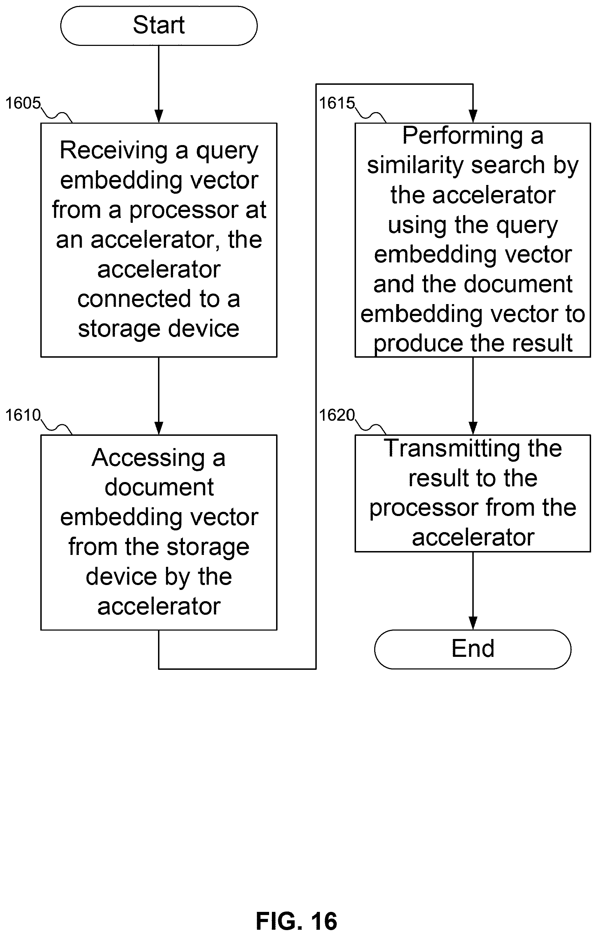

FIG. 16 shows a flowchart of an example procedure for storage accelerator 140 of FIG. 1 processing query 405 of FIG. 4 using document embedding vectors 315 of FIG. 3, according to embodiments of the disclosure. In FIG. 16, at block 1605, storage accelerator 140 of FIG. 1 may receive query embedding vector 410 of FIG. 4 from processor 110 of FIG. 1. (As discussed above, in some embodiments of the disclosure, storage accelerator 140 of FIG. 1 may be part or all of a computational storage unit: thus, a reference to storage accelerator 140 of FIG. 1, in FIG. 16 or elsewhere, may be understood as also or alternatively referencing a computational storage unit and vice versa.) At block 1610, storage accelerator 140 of FIG. 1 may access document embedding vector 315 of FIG. 3 from storage device 120 of FIG. 1. At block 1615, storage accelerator 140 of FIG. 1 may generate result 445 of FIG. 4, based on its processing of query embedding vector 410 of FIG. 4 and document embedding vector 315 of FIG. 3 (that is, performing similarity search 440 of FIG. 4). At block 1620, storage accelerator 140 of FIG. 1 may return result 445 of FIG. 4 to processor 110 of FIG. 1.

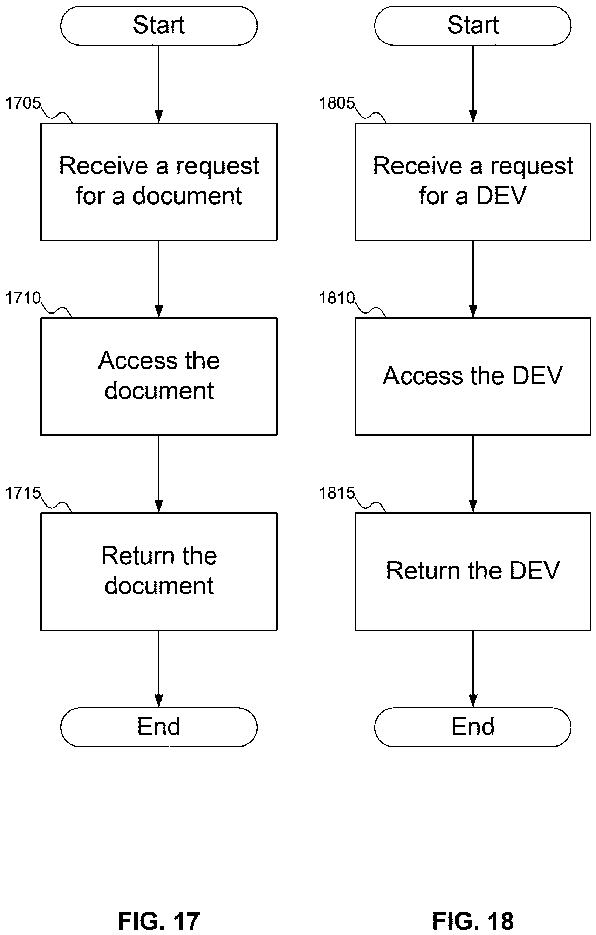

FIG. 17 shows a flowchart of an example procedure for storage device 120 of FIG. 1 returning document 305 of FIG. 3 requested by processor 110 of FIG. 1, according to embodiments of the disclosure. In FIG. 17, at block 1705, storage device 120 of FIG. 1 may receive a request for document 305 of FIG. 3. This request may be received from, for example, processor 110 of FIG. 1 (or local accelerator 135 of FIG. 1). At block 1710, storage device 120 of FIG. 1 may access document 305 of FIG. 3, and at block 1715, storage device 120 of FIG. 1 may return document 305 of FIG. 3 in response to the request received at block 1705.

FIG. 18 shows a flowchart of an example procedure for storage device 120 of FIG. 1 to return document embedding vector 315 of FIG. 3 to processor 110 of FIG. 1, according to embodiments of the disclosure. In FIG. 18, at block 1805, storage device 120 of FIG. 1 may receive a request for document embedding vector 315 of FIG. 3. This request may be received from, for example, processor 110 of FIG. 1 (or local accelerator 135 of FIG. 1). At block 1810, storage device 120 of FIG. 1 may access document embedding vector 315 of FIG. 3, and at block 1815, storage device 120 of FIG. 1 may return document embedding vector 315 of FIG. 3 in response to the request received at block 1805.

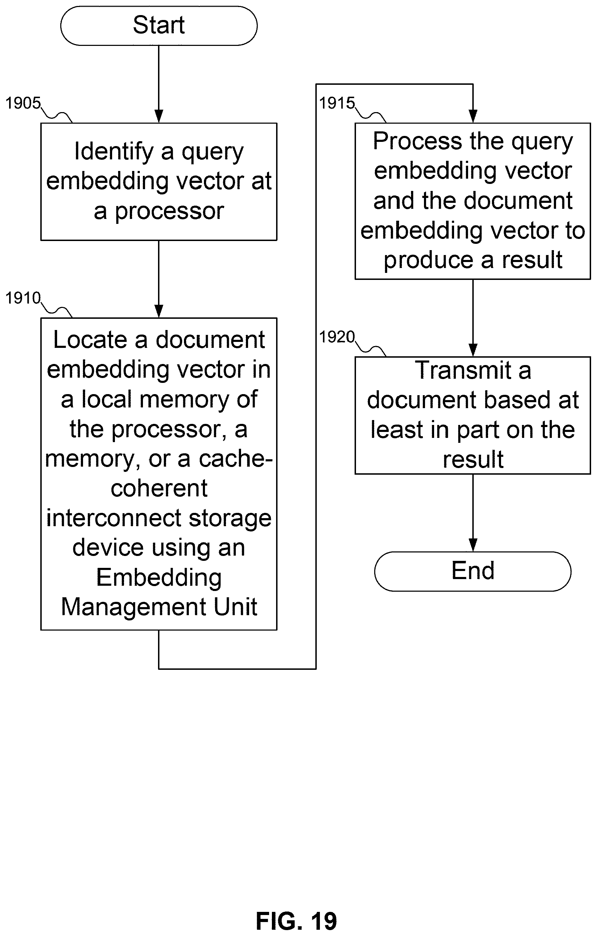

FIG. 19 shows a flowchart of an example procedure for local accelerator 135 of FIG. 1 to process query 405 of FIG. 4 using document embedding vector 315 of FIG. 3 based on EMU 805 of FIG. 8, according to embodiments of the disclosure. In FIG. 19, at block 1905, processor 110 of FIG. 1 may identify query embedding vector 410 of FIG. 4. (As discussed above, in some embodiments of the disclosure, processor 110 of FIG. 1 may be part or all of local accelerator 135 of FIG. 1: thus, a reference to processor 110 of FIG. 1, in FIG. 19 or elsewhere, may be understood as also or alternatively referencing local accelerator 135 of FIG. 1 and vice versa.) At block 1910, EMU 805 of FIG. 8 may locate a document embedding vector 315 of FIG. 3 in local memory 810 of FIG. 8, memory 115 of FIG. 1, or storage device 120 of FIG. 1. At block 1915, local accelerator 135 of FIG. 1 may generate result 43 5 of FIG. 4, based on its processing of query embedding vector 410 of FIG. 4 and document embedding vector 315 of FIG. 3 (that is, performing similarity search 430 of FIG. 4). Finally, at block 1920, processor 110 of FIG. 1 may send document 305 of FIG. 3 based on result 435 of FIG. 4 from local accelerator 135 of FIG. 1.

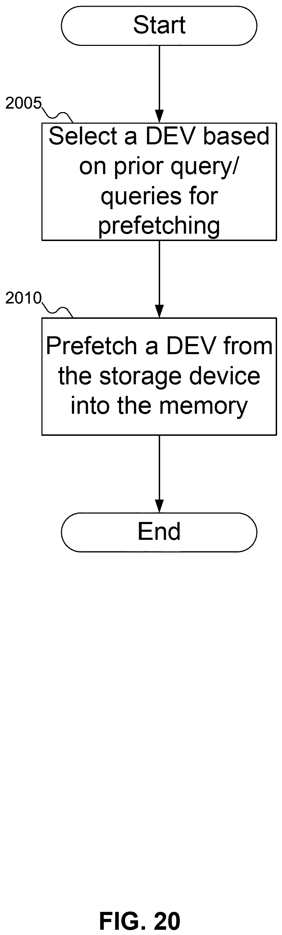

FIG. 20 shows a flowchart of an example procedure for EMU 805 of FIG. 8 to prefetch document embedding vector 315 of FIG. 3, according to embodiments of the disclosure. In FIG. 20, at block 2005, EMU 805 of FIG. 8 may select document embedding vector 315 of FIG. 3 for prefetching. EMU 805 of FIG. 8 may select document embedding vector 315 of FIG. 3 based on one or more prior queries processed by local accelerator 135 of FIG. 1. Finally, at block 2010, EMU 805 of FIG. 8 may prefetch document embedding vector 315 of FIG. 3 from storage device 120 of FIG. 1 into memory 115 of FIG. 1.

In FIGs. 10-20, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Some embodiments of the disclosure may include a processor (or local accelerator) to process queries based on document embedding vectors stored in main memory, as well as a storage accelerator to process the same queries based on document embedding vectors stored on a storage device. By using a storage accelerator to process queries using document embedding vectors stored on a storage device, embodiments of the disclosure may offer a technical advantage of reduced main memory requirements (since not all document embedding vectors need to be stored in main memory), resulting in reduced capital expenses. Embodiments of the disclosure may also offer a technical advantage in selecting document embedding vectors to be loaded into the main memory to expedite query processing as much as possible.

Some embodiments of the disclosure may also include an Embedding Management Unit (EMU) that may manage where document embedding vectors are stored. The EMU may load or flush document embedding vectors among a local memory of a local accelerator, the main memory, and the storage device (which might not have an associated storage accelerator). Embodiments of the disclosure may offer a technical advantage in that document embedding vectors may be moved efficiently among the local memory of the local accelerator, the main memory, and the storage device to support the local accelerator processing queries using the document embedding vectors.

Information retrieval systems may encode documents (text, images, audio) into document embedding vectors using highly trained neural models. The size of the embeddings may be very large depending on the size of the database (for example, hundreds of gigabytes to terabytes). As a particular example (and in no way limiting), embeddings generated using ColBERT v1 for a 3 GB text data set was 152 GB. These embeddings may be pre-loaded to the CPU memory for efficient search. As a result, neural IR systems require very large system memory.

Embodiments of the disclosure support document embeddings not being present in the system memory for retrieval. The embedding vectors may be cached using LFU replacement policy on the system memory after each retrieval. During a cache hit, the embeddings are processed using traditional means in a GPU, or other local accelerator. During a cache miss, the required embedding vectors may be dynamically read from the SSD ad-hoc and processed close to storage in the FPGA-based Computational Storage Drive (or by any processor close to the storage).

During a partial hit where some of the embeddings are stored in the SSD and some are cached in the system memory, the embeddings are processed in a distributed fashion in parallel in GPU and the CSD.

Embodiments of the disclosure may permit system memory to be reduced by 80% or more and still retrieve the documents with a similar latency.

The Ad-Hoc CSD based retrieval and processing along with a small DRAM cache may replace the large system memory required to run the IR model. The size of the DRAM cache may be increased or decreased to match the best server cost to performance ratio. Increasing the cache size may increase the average cache hit rate which may improve the overall retrieval latency.

By saving unused embedding vectors in the SSD rather than system memory (that is, by generating and storing the embeddings to the storage offline but not loading the entire library to the host DRAM), the overall system may be more power efficient. By lowering the size of the system memory required, the cost of the IR system servers may be reduced.

Caching the most frequently used embedding vectors in the host DRAM may reduce the amount of data being read from the SSD and increase the hit rate for similar sequential queries.

Processing the embeddings close to storage during a cache miss may allow for reduction in excessive data movement from SSD to CPU and the roundtrip to GPU.

Processing the embeddings close to storage may also help to hide the SSD-based latency due to the reduction in data movement.

Distributed processing of embeddings in the GPU and the CSD may reduce the amount of data to be processed in either computing unit. The GPU may avoid stalling or waiting for the data to arrive from the SSD as it only has to work with the cached embedding vectors. Parallel processing in the GPU and the CSD may also allow further acceleration in IR systems with SSDs.

Any language model and any K-Nearest Neighbor based similarity search algorithms may be used in conjunction to the CSD based embedding retrieval and processing. Furthermore, the CSD based embedding processing may be extended to any data type, not just text documents.

The complete IR system procedure with distributed embedding processing may include converting documents (text, image, audio, etc.) to document embeddings offline using any machine learning model and saved to storage. The query may also be converted to query embeddings using the same machine learning model. The most similar documents may be retrieved using K nearest neighbor lookup algorithm to decrease processing cost.

The actual document embeddings may be retrieved from the system cache if there is a hit and may be processed in GPU. During a total cache miss, the FPGA CSD may process the embeddings close to storage. During a partial cache hit, the GPU and the FPGA may simultaneously process the embeddings.

The query embeddings may be compared with the document embeddings using cosine similarity or other vector similarity metric.

The documents may be ranked using the similarity scores, which may be used to retrieve the actual documents.

Other embodiments of the disclosure enable document embeddings to not be stored in the system memory for retrieval. The embedding vectors may be dynamically read from the SSD ad-hoc and cached in the system memory for future reference. The cache may follow a LFU replacement policy. The system memory required to run the IR system may be reduced by 80% or more. The embedding vectors may also be loaded directly into an accelerator memory for processing by the accelerator. The accelerator may use any desired form: for example, a Graphics Processing Unit (GPU) or a Field Programmable Gate Array (FPGA), among other possibilities. An Embedding Management Unit (EMU) may manage what embedding vectors are loaded and where they are stored.

The embedding vectors may be stored initially in a cache-coherent interconnect Solid State Drive (SSD). The cache-coherent interconnect SSD may use a protocol such as the Compute Express Link (CXL) protocol. While embodiments of the disclosure focus on SSDs, embodiments of the disclosure may extend to any type of cache-coherent interconnect storage device, and are not limited to just CXL SSDs.

When a query is received, the EMU may determine where the appropriate embedding vectors are stored. If the embedding vectors are stored in the accelerator memory, the accelerator may proceed to process the query. If the embedding vectors are stored in the CPU DRAM or the CXL SSD, the embedding vectors may be transferred to the accelerator memory. Note that this transfer may be done without the accelerator being aware that the embedding vectors have been transferred to the accelerator memory. The accelerator may access the accelerator memory using a unified address space. If the address used is not in the accelerator memory, the system may automatically transfer the embedding vectors into the accelerator memory so that the accelerator may access the embedding vectors from its memory.

The EMU may also use the embedding vectors appropriate to the query to perform prefetching of other embedding vectors from the CXL SSD into the CPU DRAM. That is, given the embedding vectors relevant to the current query, the EMU may prefetch other embedding vectors expected to be relevant to an upcoming query. Then, if those embedding vectors are relevant to a later query, the embedding vectors may be transferred from the CPU DRAM to the accelerator memory.

The accelerator memory, the CPU DRAM, and the CXL SSD may function as a multi-tier cache. Embedding vectors may be loaded into the accelerator memory. When embedding vectors are evicted from the accelerator memory (which may use a least recently used cache management scheme, although other cache management schemes may also be used), the evicted embedding vectors may be transferred to the CPU DRAM. The CPU DRAM may also use a cache management scheme, such as a least recently used cache management scheme, to evict embedding vectors back to the CXL SSD. (Note that embedding vectors should not change unless the underlying data changes. So evicting an embedding vector from the CPU DRAM should not involve writing data back to the CXL SSD.)

The EMU may decide how and where to load the embeddings. If the embeddings are cached in the GPU Memory, no load operations are needed. If the embeddings are cached in the CPU Memory, the embeddings may be loaded into the GPU Memory from the CPU memory. If the embeddings have not been cached, they may be read directly from the CXL SSD with fine-grained access to the GPU cache. If partial embeddings are in CPU Memory and partial embeddings are in CXL SSD, they may be read simultaneously to saturate the I/O bus bandwidth.

Embodiments of the disclosure enable document embeddings to not be stored in the system memory for retrieval. The embedding vectors may be dynamically read from the SSD ad-hoc and cached in the system memory for future reference. The cache may follow a LFU replacement policy. The system memory required to run the IR system may be reduced by 80% or more.

Embodiments of the disclosure provide for efficient use of hardware through multi-tiered embedding caching in GPU, CPU, and CXL SSD. The EMU may prefetch predicted next embeddings vectors which increases cache hit rate. Embodiments of the disclosure may be more energy efficient and offer a low latency as the GPU/accelerator may access CXL SSD directly without extra data movement through the CPU DRAM.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth®, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:

Statement 1. An embodiment of the disclosure includes a system, comprising:

a storage device, the storage device storing a document embedding vector;
an accelerator connected to the storage device, the accelerator configured to process a query embedding vector and the document embedding vector; and
a processor connected to the storage device and the accelerator, the processor configured to transmit the query embedding vector to the accelerator.

Statement 2. An embodiment of the disclosure includes the system according to statement 1, wherein the system includes an information retrieval system, the information retrieval system configured to return a document based at least in part on a query associated with the query embedding vector.

Statement 3. An embodiment of the disclosure includes the system according to statement 2, wherein the processor is configured to generate the query embedding vector based at least in part on the query.

Statement 4. An embodiment of the disclosure includes the system according to statement 2, further comprising a document associated with the document embedding vector.

Statement 5. An embodiment of the disclosure includes the system according to statement 4, wherein the storage device stores the document.

Statement 6. An embodiment of the disclosure includes the system according to statement 4, further comprising a second storage device storing the document.

Statement 7. An embodiment of the disclosure includes the system according to statement 4, wherein:

the system further comprises a memory storing a second document embedding vector; and
the processor is configured to process the query embedding vector and the second document embedding vector.

Statement 8. An embodiment of the disclosure includes the system according to statement 7, wherein the storage device stores a second document associated with the second document embedding vector.

Statement 9. An embodiment of the disclosure includes the system according to statement 7, further comprising a second storage device storing a second document associated with the second document embedding vector.

Statement 10. An embodiment of the disclosure includes the system according to statement 1, wherein the storage device includes a Solid State Drive (SSD).

Statement 11. An embodiment of the disclosure includes the system according to statement 1, wherein the storage device includes the accelerator.

Statement 12. An embodiment of the disclosure includes the system according to statement 1, further comprising a computational storage unit, the computational storage unit including the storage device and the accelerator.

Statement 13. An embodiment of the disclosure includes the system according to statement 1, wherein the accelerator includes a Field Programmable Gate Array (FPGA), an Application-Specific Integrated Circuit (ASIC), a System-on-a-Chip (SoC), a Graphics Processing Unit (GPU), a General Purpose GPU (GPGPU), a Tensor Processing Unit (TPU), a Neural Processing Unit (NPU), or a Central Processing Unit (CPU).

Statement 14. An embodiment of the disclosure includes the system according to statement 1, further comprising a second accelerator including the processor.

Statement 15. An embodiment of the disclosure includes the system according to statement 14, wherein the processor includes an FPGA, an ASIC, an SoC, a GPU, a GPGPU, a TPU, an NPU, or a CPU.

Statement 16. An embodiment of the disclosure includes the system according to statement 1, wherein the accelerator is configured to perform a similarity search using the query embedding vector and the document embedding vector to produce a result.

Statement 17. An embodiment of the disclosure includes the system according to statement 16, wherein the processor is configured to perform a second similarity search using the query embedding vector and a second document embedding vector to generate a second result.

Statement 18. An embodiment of the disclosure includes the system according to statement 17, further comprising a memory including the second document embedding vector.

Statement 19. An embodiment of the disclosure includes the system according to statement 17, wherein the processor is configured to combine the result and the second result.

Statement 20. An embodiment of the disclosure includes the system according to statement 1, wherein the processor is configured to copy the document embedding vector into a memory based at least in part on the accelerator comparing the query embedding vector with the document embedding vector.

Statement 21. An embodiment of the disclosure includes the system according to statement 20, wherein the processor is configured to evict a second document embedding vector from the memory using an eviction policy.

Statement 22. An embodiment of the disclosure includes the system according to statement 21, wherein the eviction policy includes a Least Frequency Used (LFU) or a Least Recently Used (LRU) eviction policy.

Statement 23. An embodiment of the disclosure includes the system according to statement 20, wherein the processor is configured to copy the document embedding vector into the memory based at least in part on a selection policy.

Statement 24. An embodiment of the disclosure includes the system according to statement 23, wherein the selection policy includes a Most Frequency Used (MFU) or a Most Recently Used (MRU) selection policy.

Statement 25. An embodiment of the disclosure includes the system according to statement 1, wherein the processor is configured to receive the query from a host.

Statement 26. An embodiment of the disclosure includes the system according to statement 25, wherein the processor is configured to transmit a document to the host.

Statement 27. An embodiment of the disclosure includes the system according to statement 26, wherein the document is based at least in part on a result received from the accelerator.

Statement 28. An embodiment of the disclosure includes a method, comprising:

identifying a query embedding vector at a processor;
determining that a document embedding vector is stored on a storage device;
sending the query embedding vector to an accelerator connected to the storage device;
receiving from the storage device a result; and
transmitting a document based at least in part on the result.

Statement 29. An embodiment of the disclosure includes the method according to statement 28, wherein the storage device includes a Solid State Drive (SSD).

Statement 30. An embodiment of the disclosure includes the method according to statement 28, wherein the storage device includes the accelerator.

Statement 31. An embodiment of the disclosure includes the method according to statement 28, wherein sending the query embedding vector to the accelerator connected to the storage device includes sending the query embedding vector to a computational storage unit, the computational storage unit including the storage device and the accelerator.

Statement 32. An embodiment of the disclosure includes the method according to statement 28, wherein the accelerator includes a Field Programmable Gate Array (FPGA), an Application-Specific Integrated Circuit (ASIC), a System-on-a-Chip (SoC), a Graphics Processing Unit (GPU), a General Purpose GPU (GPGPU), a Tensor Processing Unit (TPU), a Neural Processing Unit (NPU), or a Central Processing Unit (CPU).

Statement 33. An embodiment of the disclosure includes the method according to statement 28, wherein the processor includes an FPGA, an ASIC, an SoC, a GPU, a GPGPU, a TPU, an NPU, or a CPU.

Statement 34. An embodiment of the disclosure includes the method according to statement 28, wherein identifying the query embedding vector includes:

receiving a query at the processor; and
generating the query embedding vector based at least in part on the query.

Statement 35. An embodiment of the disclosure includes the method according to statement 34, wherein:

receiving the query at the processor includes receiving the query at the processor from a host; and
transmitting the document based at least in part on the result includes transmitting the document to the host based at least in part on the result.

Statement 36. An embodiment of the disclosure includes the method according to statement 34, wherein generating the query embedding vector based at least in part on the query includes generating the query embedding vector at the processor based at least in part on the query.

Statement 37. An embodiment of the disclosure includes the method according to statement 28, wherein the document embedding vector is associated with the document.

Statement 38. An embodiment of the disclosure includes the method according to statement 28, wherein transmitting the document based at least in part on the result includes retrieving the document from the storage device.

Statement 39. An embodiment of the disclosure includes the method according to statement 28, wherein transmitting the document based at least in part on the result includes retrieving the document from a second storage device.

Statement 40. An embodiment of the disclosure includes the method according to statement 28, wherein:

the method further comprises processing the query embedding vector and a second document embedding vector to produce a second result; and
transmitting the document based at least in part on the result includes:

combining the result and the second result to produce a combined result; and
transmitting the document based at least in part on the combined result.

Statement 41. An embodiment of the disclosure includes the method according to statement 40, wherein processing the query embedding vector and the second document embedding vector to produce the second result includes processing the query embedding vector and the second document embedding vector stored in a memory to produce the second result.

Statement 42. An embodiment of the disclosure includes the method according to statement 40, wherein:

the accelerator is configured to perform a first similarity search using the query embedding vector and the document embedding vector to produce the result; and
processing the query embedding vector and the second document embedding vector to produce the second result includes performing a second similarity search using the query embedding vector and the second document embedding vector to generate the second result.

Statement 43. An embodiment of the disclosure includes the method according to statement 28, further comprising copying the document embedding vector from the storage device to a memory.

Statement 44. An embodiment of the disclosure includes the method according to statement 43, wherein copying the document embedding vector from the storage device to the memory includes selecting the document embedding vector for copying from the storage device to the memory.

Statement 45. An embodiment of the disclosure includes the method according to statement 44, wherein selecting the document embedding vector for copying from the storage device to the memory includes selecting the document embedding vector for copying from the storage device to the memory using a Most Frequency Used (MFU) or a Most Recently Used (MRU) selection policy.

Statement 46. An embodiment of the disclosure includes the method according to statement 43, further comprising evicting a second document embedding vector from the memory.

Statement 47. An embodiment of the disclosure includes the method according to statement 46, evicting the second document embedding vector from the memory includes selecting the second document embedding vector for eviction from the memory.

Statement 48. An embodiment of the disclosure includes the method according to statement 47, selecting the second document embedding vector for eviction from the memory includes selecting the second document embedding vector for eviction from the memory using a Least Frequency Used (LFU) or a Least Recently Used (LRU) eviction policy.

Statement 49. An embodiment of the disclosure includes a method, comprising:

receiving a query embedding vector from a processor at an accelerator, the accelerator connected to a storage device;

accessing a document embedding vector from the storage device by the accelerator;

performing a similarity search by the accelerator using the query embedding vector and the document embedding vector to produce the result; and

transmitting the result to the processor from the accelerator.

Statement 50. An embodiment of the disclosure includes the method according to statement 49, wherein the storage device includes a Solid State Drive (SSD).

Statement 51. An embodiment of the disclosure includes the method according to statement 49, wherein the storage device includes the accelerator.

Statement 52. An embodiment of the disclosure includes the method according to statement 49, wherein receiving the query embedding vector from the processor at the accelerator includes receiving the query embedding vector from the processor at a computational storage unit, the computational storage unit including the storage device and the accelerator.

Statement 53. An embodiment of the disclosure includes the method according to statement 49, wherein the accelerator includes a Field Programmable Gate Array (FPGA), an Application-Specific Integrated Circuit (ASIC), a System-on-a-Chip (SoC), a Graphics Processing Unit (GPU), a General Purpose GPU (GPGPU), a Tensor Processing Unit (TPU), a Neural Processing Unit (NPU), or a Central Processing Unit (CPU).

Statement 54. An embodiment of the disclosure includes the method according to statement 49, further comprising:

receiving a request for a document associated with the document embedding vector from the processor;

accessing the document associated with the document embedding vector from the storage device; and

returning the document from the storage device to the processor.

Statement 55. An embodiment of the disclosure includes the method according to statement 49, further comprising:

receiving a request from the processor for the document embedding vector;

accessing the document embedding vector from the storage device; and

transmitting the document embedding vector to the processor.

Statement 56. An embodiment of the disclosure includes an article, comprising a non-transitory storage medium, the non-transitory storage medium having stored thereon instructions that, when executed by a machine, result in:

identifying a query embedding vector at a processor;

determining that a document embedding vector is stored on a storage device;

sending the query embedding vector to an accelerator connected to the storage device;

receiving from the storage device a result; and

transmitting a document based at least in part on the result.

Statement 57. An embodiment of the disclosure includes the article according to statement 56, wherein the storage device includes a Solid State Drive (SSD).

Statement 58. An embodiment of the disclosure includes the article according to statement 56, wherein the storage device includes the accelerator.

Statement 59. An embodiment of the disclosure includes the article according to statement 56, wherein sending the query embedding vector to the accelerator connected to the storage device includes sending the query embedding vector to a computational storage unit, the computational storage unit including the storage device and the accelerator.

Statement 60. An embodiment of the disclosure includes the article according to statement 56, wherein the accelerator includes a Field Programmable Gate Array (FPGA), an Application-Specific Integrated Circuit (ASIC), a System-on-a-Chip (SoC), a Graphics Processing Unit (GPU), a General Purpose GPU (GPGPU), a Tensor Processing Unit (TPU), a Neural Processing Unit (NPU), or a Central Processing Unit (CPU).

Statement 61. An embodiment of the disclosure includes the article according to statement 56, wherein the processor includes an FPGA, an ASIC, an SoC, a GPU, a GPGPU, a TPU, an NPU, or a CPU.

Statement 62. An embodiment of the disclosure includes the article according to statement 56, wherein identifying the query embedding vector includes:

receiving a query at the processor; and
generating the query embedding vector based at least in part on the query.

Statement 63. An embodiment of the disclosure includes the article according to statement 62, wherein:

receiving the query at the processor includes receiving the query at the processor from a host; and
transmitting the document based at least in part on the result includes transmitting the document to the host based at least in part on the result.

Statement 64. An embodiment of the disclosure includes the article according to statement 62, wherein generating the query embedding vector based at least in part on the query includes generating the query embedding vector at the processor based at least in part on the query.

Statement 65. An embodiment of the disclosure includes the article according to statement 56, wherein the storage device includes a document embedding vector associated with the document.

Statement 66. An embodiment of the disclosure includes the article according to statement 56, wherein transmitting the document based at least in part on the result includes retrieving the document from the storage device.

Statement 67. An embodiment of the disclosure includes the article according to statement 56, wherein transmitting the document based at least in part on the result includes retrieving the document from a second storage device.

Statement 68. An embodiment of the disclosure includes the article according to statement 56, wherein:

the non-transitory storage medium has stored thereon further instructions that, when executed by the machine, result in processing the query embedding vector and a second document embedding vector to produce a second result; and
transmitting the document based at least in part on the result includes:

combining the result and the second result to produce a combined result; and
transmitting the document based at least in part on the combined result.

Statement 69. An embodiment of the disclosure includes the article according to statement 68, wherein processing the query embedding vector and a second document embedding vector to produce the second result includes processing the query embedding vector and a second document embedding vector stored in a memory to produce the second result.

Statement 70. An embodiment of the disclosure includes the article according to statement 68, wherein:

the accelerator is configured to perform a first similarity search using the query embedding vector and the document embedding vector to produce the result; and
processing the query embedding vector and the second document embedding vector to produce the second result includes performing a second similarity search using the query embedding vector and the second document embedding vector to generate the second result.

Statement 71. An embodiment of the disclosure includes the article according to statement 56, the non-transitory storage medium having stored thereon further instructions that, when executed by the machine, result in copying the document embedding vector from the storage device to a memory.

Statement 72. An embodiment of the disclosure includes the article according to statement 71, wherein copying the document embedding vector from the storage device to the memory includes selecting the document embedding vector for copying from the storage device to the memory.

Statement 73. An embodiment of the disclosure includes the article according to statement 72, wherein selecting the document embedding vector for copying from the storage device to the memory includes selecting the document embedding vector for copying from the storage device to the memory using a Most Frequency Used (MFU) or a Most Recently Used (MRU) selection policy.

Statement 74. An embodiment of the disclosure includes the article according to statement 71, the non-transitory storage medium having stored thereon further instructions that, when executed by the machine, result in evicting a second document embedding vector from the memory.

Statement 75. An embodiment of the disclosure includes the article according to statement 74, evicting the second document embedding vector from the memory includes selecting the second document embedding vector for eviction from the memory.

Statement 76. An embodiment of the disclosure includes the article according to statement 75, selecting the second document embedding vector for eviction from the memory includes selecting the second document embedding vector for eviction from the memory using a Least Frequency Used (LFU) or a Least Recently Used (LRU) eviction policy.

Statement 77. An embodiment of the disclosure includes an article, comprising a non-transitory storage medium, the non-transitory storage medium having stored thereon instructions that, when executed by a machine, result in:

receiving a query embedding vector from a processor at an accelerator, the accelerator connected to a storage device;
accessing a document embedding vector from the storage device by the accelerator;
performing a similarity search by the accelerator using the query embedding vector and the document embedding vector to produce a result; and
transmitting the result to the processor from the accelerator.

Statement 78. An embodiment of the disclosure includes the article according to statement 77, wherein the storage device includes a Solid State Drive (SSD).

Statement 79. An embodiment of the disclosure includes the article according to statement 77, wherein the storage device includes the accelerator.

Statement 80. An embodiment of the disclosure includes the article according to statement 77, wherein receiving the query embedding vector from the processor at the accelerator includes receiving the query embedding vector from the processor at a computational storage unit, the computational storage unit including the storage device and the accelerator.

Statement 81. An embodiment of the disclosure includes the article according to statement 77, wherein the accelerator includes a Field Programmable Gate Array (FPGA), an Application-Specific Integrated Circuit (ASIC), a System-on-a-Chip (SoC), a Graphics Processing Unit (GPU), a General Purpose GPU (GPGPU), a Tensor Processing Unit (TPU), a Neural Processing Unit (NPU), or a Central Processing Unit (CPU).

Statement 82. An embodiment of the disclosure includes the article according to statement 77, the non-transitory storage medium having stored thereon further instructions that, when executed by the machine, result in:

receiving a request for a document associated with the document embedding vector from the processor;
accessing the document associated with the document embedding vector from the storage device; and
returning the document from the storage device to the processor.

Statement 83. An embodiment of the disclosure includes the article according to statement 77, the non-transitory storage medium having stored thereon further instructions that, when executed by the machine, result in:

receiving a request from the processor for the document embedding vector;
accessing the document embedding vector from the storage device; and
transmitting the document embedding vector to the processor.

Statement 84. An embodiment of the disclosure includes a system, comprising:

a processor, the processor including a local memory;
a memory connected to the processor;
a cache-coherent interconnect storage device connected to the processor; and
an embedding management unit (EMU) configured to manage the storage of a document embedding vector in the local memory, the memory, or the cache-coherent interconnect storage device.

Statement 85. An embodiment of the disclosure includes the system according to statement 84, wherein the cache-coherent interconnect storage device includes a Compute Express Link (CXL) storage device.

Statement 86. An embodiment of the disclosure includes the system according to statement 85, wherein the CXL storage device includes a CXL Solid State Drive (SSD).

Statement 87. An embodiment of the disclosure includes the system according to statement 84, wherein the local memory, the memory, and the cache-coherent interconnect storage device form a unified memory space.

Statement 88. An embodiment of the disclosure includes the system according to statement 84, wherein the EMU is configured to copy the document embedding vector into the local memory based at least in part on a query.

Statement 89. An embodiment of the disclosure includes the system according to statement 88, wherein the EMU is configured to copy the document embedding vector into the local memory from the memory or the cache-coherent interconnect storage device based at least in part on the query.

Statement 90. An embodiment of the disclosure includes the system according to statement 88, wherein the EMU is configured to copy the document embedding vector from the memory into the local memory based at least in part on the query and to delete the document embedding vector from the memory.

Statement 91. An embodiment of the disclosure includes the system according to statement 88, wherein the EMU is further configured to evict a second document embedding vector from the local memory using an eviction policy.

Statement 92. An embodiment of the disclosure includes the system according to statement 91, wherein the eviction policy includes a Least Frequency Used (LFU) or a Least Recently Used (LRU) eviction policy.

Statement 93. An embodiment of the disclosure includes the system according to statement 91, wherein the EMU is configured to copy the second document embedding vector from the local memory to the memory using the eviction policy.

Statement 94. An embodiment of the disclosure includes the system according to statement 88, wherein the EMU is further configured to evict a second document embedding vector from the memory using an eviction policy.

Statement 95. An embodiment of the disclosure includes the system according to statement 94, wherein the eviction policy includes a Least Frequency Used (LFU) or a Least Recently Used (LRU) eviction policy.

Statement 96. An embodiment of the disclosure includes the system according to statement 84, wherein the EMU is configured to prefetch a second document embedding vector from the cache-coherent interconnect storage device into the memory.

Statement 97. An embodiment of the disclosure includes the system according to statement 96, wherein the EMU is configured to prefetch the second document embedding vector from the cache-coherent interconnect storage device into the memory based at least in part on a query.

Statement 98. An embodiment of the disclosure includes the system according to statement 97, wherein the query includes a prior query.

Statement 99. An embodiment of the disclosure includes the system according to statement 84, further comprising an accelerator including the processor.

Statement 100.An embodiment of the disclosure includes the system according to statement 99, wherein the processor includes a Field Programmable Gate Array (FPGA), an Application-Specific Integrated Circuit (ASIC), a System-on-a-Chip (SoC), a Graphics Processing Unit (GPU), a General Purpose GPU (GPGPU), a Tensor Processing Unit (TPU), a Neural Processing Unit (NPU), or a Central Processing Unit (CPU).

Statement 101.An embodiment of the disclosure includes the system according to statement 84, wherein the processor is configured to generate a query embedding vector based at least in part on a query and to process the query embedding vector and the document embedding vector.

Statement 102.An embodiment of the disclosure includes the system according to statement 101, wherein the local memory includes the document embedding vector.

Statement 103.An embodiment of the disclosure includes the system according to statement 101, wherein the processor is configured to perform a similarity search using the query embedding vector and the document embedding vector to generate a result.

Statement 104.An embodiment of the disclosure includes the system according to statement 101, wherein the processor is configured to access the document embedding vector from the local memory.

Statement 105.An embodiment of the disclosure includes the system according to statement 101, wherein the processor is configured to access the document embedding vector from the memory.

Statement 106.An embodiment of the disclosure includes the system according to statement 101, wherein the processor is configured to access the document embedding vector from the cache-coherent interconnect storage device.

Statement 107.An embodiment of the disclosure includes the system according to statement 84, further comprising an accelerator connected to the cache-coherent interconnect storage device, the accelerator configured to process a query embedding vector and the document embedding vector stored on the cache-coherent interconnect storage device and to produce a result.

Statement 108.An embodiment of the disclosure includes the system according to statement 107, wherein the processor is configured to transmit a document based at least in part on the result of the accelerator.

Statement 109.An embodiment of the disclosure includes the system according to statement 107, wherein the processor is configured to perform a process the query embedding vector and a second document embedding vector to generate a second result.

Statement 110.An embodiment of the disclosure includes the system according to statement 109, wherein the processor is configured to combine the result of the accelerator and the second result to produce a combined result.

Statement 111.An embodiment of the disclosure includes the system according to statement 110, wherein the processor is configured to transmit a document based at least in part on the combined result.

Statement 112. An embodiment of the disclosure includes a method, comprising:

identifying a query embedding vector at a processor;

locating a document embedding vector in a local memory of the processor, a memory, or a cache-coherent interconnect storage device using an Embedding Management Unit (EMU);

processing the query embedding vector and the document embedding vector to produce a result; and

transmitting a document based at least in part on the result.

Statement 113. An embodiment of the disclosure includes the method according to statement 112, wherein the cache-coherent interconnect storage device includes a Compute Express Link (CXL) storage device.

Statement 114. An embodiment of the disclosure includes the method according to statement 113, wherein the CXL storage device includes a CXL Solid State Drive (SSD).

Statement 115. An embodiment of the disclosure includes the method according to statement 112, wherein the local memory, the memory, and the cache-coherent interconnect storage device form a unified memory space.

Statement 116. An embodiment of the disclosure includes the method according to statement 112, wherein:

locating the document embedding vector using the EMU includes locating the document in the local memory of the processor using the EMU; and

processing the query embedding vector and the document embedding vector to produce the result includes processing the query embedding vector and the document embedding vector in the local memory to produce the result.

Statement 117. An embodiment of the disclosure includes the method according to statement 112, wherein locating the document embedding vector in the local memory of the processor, the memory, or the cache-coherent interconnect storage device using the EMU includes locating the document embedding vector in the memory or the cache-coherent interconnect storage device using EMU.

Statement 118. An embodiment of the disclosure includes the method according to statement 117, wherein processing the query embedding vector and the document embedding vector to produce the result includes processing the query embedding vector and the document embedding vector in the memory or the cache-coherent interconnect storage device to produce the result.

Statement 119. An embodiment of the disclosure includes the method according to statement 118, wherein processing the query embedding vector and the document embedding vector to produce the result includes:

copying the document embedding vector from the memory or the cache-coherent interconnect storage device into the local memory; and

processing the query embedding vector and the document embedding vector in the local memory to produce the result.

Statement 120. An embodiment of the disclosure includes the method according to statement 119, wherein copying the document embedding vector from the memory or the cache-coherent interconnect storage device into the local memory includes:

selecting a second document embedding vector in the local memory for eviction using an eviction policy;

copying the second document embedding vector from the local memory into the memory.

Statement 121. An embodiment of the disclosure includes the method according to statement 120, wherein selecting the second document embedding vector in the local memory for eviction using an eviction policy includes selecting the second document embedding vector for eviction from the local memory using a Least Frequency Used (LFU) or a Least Recently Used (LRU) eviction policy.

Statement 122. An embodiment of the disclosure includes the method according to statement 120, wherein copying the second document embedding vector from the local memory into the memory includes:

selecting a third document embedding vector in the memory for eviction using a second eviction policy; and

deleting the third document embedding vector from the memory.

Statement 123. An embodiment of the disclosure includes the method according to statement 122, wherein selecting the third document embedding vector in the memory for eviction using a second eviction policy includes selecting the third document embedding vector in the memory for eviction using a LFU or an LRU eviction policy.

Statement 124. An embodiment of the disclosure includes the method according to statement 112, further comprising prefetching a second document embedding vector from the cache-coherent interconnect storage device into the memory based at least in part on a query associated with the query embedding vector.

Statement 125. An embodiment of the disclosure includes an article, comprising a non-transitory storage medium, the non-transitory storage medium having stored thereon instructions that, when executed by a machine, result in:

identifying a query embedding vector at a processor;
locating a document embedding vector in a local memory of the processor, a memory, or a cache-coherent interconnect storage device using an Embedding Management Unit (EMU);
processing the query embedding vector and the document embedding vector to produce a result; and
transmitting a document based at least in part on the result.

Statement 126. An embodiment of the disclosure includes the article according to statement 125, wherein the cache-coherent interconnect storage device includes a Compute Express Link (CXL) storage device.

Statement 127. An embodiment of the disclosure includes the article according to statement 126, wherein the CXL storage device includes a CXL Solid State Drive (SSD).

Statement 128. An embodiment of the disclosure includes the article according to statement 125, wherein the local memory, the memory, and the cache-coherent interconnect storage device form a unified memory space.

Statement 129. An embodiment of the disclosure includes the article according to statement 125, wherein:

locating the document embedding vector using the EMU includes locating the document in the local memory of the processor using the EMU; and
processing the query embedding vector and the document embedding vector to produce the result includes processing the query embedding vector and the document embedding vector in the local memory to produce the result.

Statement 130. An embodiment of the disclosure includes the article according to statement 125, wherein locating the document embedding vector in the local memory of the processor, the memory, or the cache-coherent interconnect storage device using the EMU includes locating the document embedding vector in the memory or the cache-coherent interconnect storage device using EMU.

Statement 131. An embodiment of the disclosure includes the article according to statement 130, wherein processing the query embedding vector and the document embedding vector to produce the result includes processing the query embedding vector and the document embedding vector in the memory or the cache-coherent interconnect storage device to produce the result.

Statement 132. An embodiment of the disclosure includes the article according to statement 131, wherein processing the query embedding vector and the document embedding vector to produce the result includes:

copying the document embedding vector from the memory or the cache-coherent interconnect storage device into the local memory; and
processing the query embedding vector and the document embedding vector in the local memory to produce the result.

Statement 133. An embodiment of the disclosure includes the article according to statement 132, wherein copying the document embedding vector from the memory or the cache-coherent interconnect storage device into the local memory includes:

selecting a second document embedding vector in the local memory for eviction using an eviction policy;
copying the second document embedding vector from the local memory into the memory.

Statement 134. An embodiment of the disclosure includes the article according to statement 133, wherein selecting the second document embedding vector in the local memory for eviction using an eviction policy includes selecting the second document embedding vector for eviction from the local memory using a Least Frequency Used (LFU) or a Least Recently Used (LRU) eviction policy.

Statement 135. An embodiment of the disclosure includes the article according to statement 133, wherein copying the second document embedding vector from the local memory into the memory includes:

selecting a third document embedding vector in the memory for eviction using a second eviction policy;

deleting the third document embedding vector from the memory.

Statement 136.An embodiment of the disclosure includes the article according to statement 135, wherein selecting the third document embedding vector in the memory for eviction using the second eviction policy includes selecting the third document embedding vector in the memory for eviction using a LFU or an LRU eviction policy.
Statement 137.An embodiment of the disclosure includes the article according to statement 125, the non-transitory storage medium having stored thereon further instructions that, when executed by the machine, result in prefetching a second document embedding vector from the cache-coherent interconnect storage device into the memory based at least in part on a query associated with the query embedding vector.

**Claims**

1. A system, comprising:

   a processor, the processor including a local memory;
   a memory connected to the processor;
   a cache-coherent interconnect storage device connected to the processor; and
   an embedding management unit, EMU, configured to manage the storage of a document embedding vector in the local memory, the memory, or the cache-coherent interconnect storage device.

2. The system according to claim 1, wherein the cache-coherent interconnect storage device includes a Compute Express Link, CXL, storage device.

3. The system according to claim 1 or 2, wherein the local memory, the memory, and the cache-coherent interconnect storage device form a unified memory space.

4. The system according to any one of claims 1 to 3, wherein the EMU is further configured to copy the document embedding vector into the local memory based at least in part on a query.

5. The system according to claim 4, wherein the EMU is further configured to evict a second document embedding vector from the local memory using an eviction policy.

6. The system according to claim 5, wherein the EMU is further configured to copy the second document embedding vector from the local memory to the memory using the eviction policy.

7. The system according to claim 4, wherein the EMU is further configured to evict a second document embedding vector from the memory using an eviction policy.

8. The system according to any one of claims 1 to 4, wherein the EMU is further configured to prefetch a second document embedding vector from the cache-coherent interconnect storage device into the memory.

9. The system according to any one of claims 1 to 8, further comprising an accelerator including the processor.

10. The system according to any one of claims 1 to 9, wherein the processor is configured to generate a query embedding vector based at least in part on a query and to process the query embedding vector and the document embedding vector.

11. The system according to claim 10, wherein the processor is further configured to perform a similarity search using the query embedding vector and the document embedding vector to generate a result.

12. The system according to claim 10 or 11, wherein the processor is further configured to access the document embedding vector from the local memory.

13. A method, comprising:

   identifying a query embedding vector at a processor;
   locating a document embedding vector in a local memory of the processor, a memory, or a cache-coherent interconnect storage device using an Embedding Management Unit (EMU);
processing the query embedding vector and the document embedding vector to produce a result; and
transmitting a document based at least in part on the result.

14. The method according to claim 13, wherein locating the document embedding vector in the local memory of the processor, the memory, or the cache-coherent interconnect storage device using the EMU includes locating the document embedding vector in the memory or the cache-coherent interconnect storage device using EMU.

15. The method according to claim 14, wherein processing the query embedding vector and the document embedding vector to produce the result includes processing the query embedding vector and the document embedding vector in the memory or the cache-coherent interconnect storage device to produce the result.

**FIG. 1**

**FIG. 2**

EP 4 439 314 A1

**FIG. 3**

FIG. 4

**FIG. 5A**

**FIG. 5B**

EP 4 439 314 A1

**FIG. 5C**

FIG. 5D

**FIG. 6**

EP 4 439 314 A1

**FIG. 7**

815

Unified Memory Space

| 820-1 | 820-2 | 820-3 |

805

Embedding Management Unit

115

120

Memory

CXL Storage Device

Prefetch →

Flush/ load

Local Accel.

Local Mem.

Access →

810

**FIG. 8**

810 Local Memory

115 Memory

120 Storage Device

**FIG. 9**

FIG. 10

1005

Start

1105

Receive a query

1110

Generate the QEV
from the query

End

**FIG. 11**

1020

Receive from the
storage device a
result

1205

Retrieve a
document from the
storage device

1025

Transmit a
document based at
least in part on the
result

End

**FIG. 12**

1020

Receive from the
storage device a
result

1305

Process the QEV
and a second DEV
(similarity search)

1310

Combine the results

1025

Transmit a
document based at
least in part on the
result

End

**FIG. 13**

**FIG. 14**

Start

1505
Select a first DEV to load into the local memory

1520
Delete the third DEV from the memory

1535
1510
Select a second DEV to evict from the local memory

1525
Copy the second DEV from the local memory to the memory

1540
1515
Select a third DEV to evict from the memory

1530
Copy the first DEV into the local memory

End

**FIG. 15**

Start

1605

Receiving a query embedding vector from a processor at an accelerator, the accelerator connected to a storage device

1610

Accessing a document embedding vector from the storage device by the accelerator

1615

Performing a similarity search by the accelerator using the query embedding vector and the document embedding vector to produce the result

1620

Transmitting the result to the processor from the accelerator

End

**FIG. 16**

1705

Start

Receive a request
for a document

1710

Access the
document

1715

Return the
document

End

**FIG. 17**

1805

Start

Receive a request
for a DEV

1810

Access the DEV

1815

Return the DEV

End

**FIG. 18**

Start

1905 Identify a query embedding vector at a processor

1910 Locate a document embedding vector in a local memory of the processor, a memory, or a cache-coherent interconnect storage device using an Embedding Management Unit

1915 Process the query embedding vector and the document embedding vector to produce a result

1920 Transmit a document based at least in part on the result

End

**FIG. 19**

```
                  ┌─────────────────┐
                  │      Start      │
                  └─────────────────┘
                           │
                           │
2005                       ▼
         ┌─────────────────────────────┐
         │    Select a DEV based       │
         │     on prior query/         │
         │      queries for            │
         │      prefetching            │
         └─────────────────────────────┘
                           │
                           │
2010                       ▼
         ┌─────────────────────────────┐
         │    Prefetch a DEV from      │
         │    the storage device       │
         │     into the memory         │
         └─────────────────────────────┘
                           │
                           │
                           ▼
                  ┌─────────────────┐
                  │       End       │
                  └─────────────────┘
```

**FIG. 20**

Europäisches
Patentamt

European
Patent Office

Office européen
des brevets

**EUROPEAN SEARCH REPORT**

Application Number

EP 24 15 9941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/050808 A1 (LI ZONGWANG [US] ET AL) 16 February 2023 (2023-02-16) * paragraph [0027] - paragraph [0048]; figures 1-9 * * paragraph [0062] - paragraph [0089] * | 1-15 | INV. G06F12/0868 |
| X | KWON MIRYEONG ET AL: "Failure Tolerant Training With Persistent Memory Disaggregation Over CXL", IEEE MICRO, IEEE SERVICE CENTER, LOS ALAMITOS, CA, US, vol. 43, no. 2, 16 January 2023 (2023-01-16), pages 66-75, XP011935870, ISSN: 0272-1732, DOI: 10.1109/MM.2023.3237548 [retrieved on 2023-01-17] * page 2 - page 5 * | 1,8 | |

TECHNICAL FIELDS
SEARCHED      (IPC)

G06F

The present search report has been drawn up for all claims

| Place of search | Date of completion of the search | Examiner |
|---|---|---|
| The Hague | 25 July 2024 | Toader, Elena Lidia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 9941

25-07-2024

| Patent document cited in search report | Publication date | Patent family member(s) | Publication date |
|---|---|---|---|
| US 2023050808 A1 | 16-02-2023 | CN 115705299 A | 17-02-2023 |
| | | EP 4134822 A2 | 15-02-2023 |
| | | KR 20230023563 A | 17-02-2023 |
| | | TW 202311942 A | 16-03-2023 |
| | | US 2023050808 A1 | 16-02-2023 |

EPO FORM P0459

For more details about this annex : see Official Journal of the European Patent Office, No. 12/82